# EUROPEAN PATENT APPLICATION

(11) **EP 1 802 058 A1**
(43) Date of publication of application: **27.06.2007**
(21) Application number: 05782077.1
(22) Date of filing: 07.09.2005
(51) Int. Cl.: H04L 12/66, G06F 13/00

(54) **METHOD FOR PROTECTION FROM SERVICE-DISABLING ATTACK, SYSTEM FOR PROTECTION FROM SERVICE-DISABLING ATTACK, DEVICE FOR PROTECTION FROM SERVICE-DISABLING ATTACK, RELAY DEVICE, PROGRAM FOR PROTECTION FROM SERVICE-DISABLING ATTACK, AND RELAY DEVICE PROGRAM**

(30) Priority: 12.10.2004 JP 2004298243; 12.10.2004 JP 2004298245
(71) Applicant: NIPPON TELEGRAPH AND TELEPHONE CORPORATION, Tokyo 100-8116 (JP)
(72) Inventor: SATAKE, Yasuhiro, NTT, Musashino-shi, Tokyo 180-8585 (JP); MIYOSHI, Jun, Musashino-shi, Tokyo 180-8585 (JP); NAGASHIMA, Masao, Musashino-shi, Tokyo 180-8585 (JP)
(74) Representative: HOFFMANN EITLE
(86) International application number: PCT/JP2005/016450
(87) International publication number: WO 2006/040892

(57) **Abstract**

A gate device 8 acquires authorized address information indicating a source address of a non-attacking packet transmitted by an authorized device (address issuing server 10) provided on a network 2. The gate device 8 generates normal condition information indicating conditions for the non-attacking packet based on the authorized address information acquired, and restricts the passage of a packet that attacks on a communication device 7 while allowing the passage of a packet that matches conditions indicated in the normal condition information, among packets received from the network.

## Description

### TECHNICAL FIELD

The present invention relates to a denial-of-service attack protecting method of protecting a communication device against a denial of service attack, by a gate device being interposed between a repeater device that forms part of a network and a communication device that is a target of the denial of service attack or by the repeater device, and also relates to a denial-of-service attack protecting system, a denial-of-service attack protecting device, a repeater device, a denial-of-service attack protecting program, and a program for the repeater device. More particularly, the present invention relates to a denial-of-service attack protecting method capable of easily managing normal condition information indicating conditions for a non-attacking packet that does not attack on a communication device as a target for protection, a denial-of-service attack protecting system, a denial-of-service attack protecting device, a repeater device, a denial-of-service attack protecting program, and a program for the repeater device.

### BACKGROUND ART

There have been known attacks through networks such as denial of service attacks and distributed denial of service attacks (hereinafter, "DDos attack"). In a distributed denial-of-service attack protecting system that protects communication devices from such DDos attacks, packets are restricted by a gateway device provided between a communication device as a target to be attacked and a network, or by a router that forms the network. More specifically, packets transmitted to communication devices through the network are classified into a normal packet and a suspicious packet or a malicious packet, to restrict the packets to be transmitted to the communication devices (see, for example, Patent document 1).

In this type of conventional distributed denial-of-service attack protecting system, when the gateway device detects an attack based on attack detection conditions that are previously registered, a suspicious signature indicating a feature of a packet detected as one that has attacked is generated, and the suspicious signature generated is reported to a repeater device such as the router that forms the network.

On the other hand, the gateway device generates a normal signature indicating a feature of a packet, which is not regarded as one that attacks on the communication device (hereinafter, "non-attacking packet"), among packets that apply to the suspicious signature, based on the normal condition information previously registered. The normal signature generated is reported to the repeater device such as the router that forms the network.

The packet to be repeated by the repeater device to which the suspicious signature and the normal signature are reported and by the gateway device, are subjected to processing such as shaping and filtering based on the suspicious signature and the normal signature.

In this manner, the conventional distributed denial-of-service attack protecting system is configured to reduce bad influence due to a packet to attack (hereinafter, "attacking packet") as small as possible by restricting the passage of the attacking packet at a position as close to an attack source as possible.

Patent document 1: Japanese Patent Application Laid-Open No. 2003 283554

### DISCLOSURE OF INVENTION

### PROBLEM TO BE SOLVED BY THE INVENTION

In the conventional distributed denial-of-service attack protecting system, however, addition and change of normal condition information, which indicates conditions for a non-attacking packet on a communication device as a target for protection against an attack, are managed by an operator of a gateway device. Therefore, the management of the normal condition information becomes complicated.

The present invention has been achieved to solve the problems based on the conventional technology, and it is an object of the present invention to provide a denial-of-service attack protecting method capable of easily managing normal condition information indicating conditions for a non-attacking packet that does not attack on a communication device as a target for protection, a denial-of-service attack protecting system, a denial-of-service attack protecting device, a repeater device, a denial-of-service attack protecting program, and a program for the repeater device.

### MEANS FOR SOLVING PROBLEM

To solve the above problems and to achieve the above objects, a denial-of-service attack protecting method of protecting a communication device against a denial of service attack using a gate device or a repeater device, the gate device interposing between the repeater device that forms part of a network and the communication device that is a target of the denial of service attack, comprises an issuing step, in which an authorized device on the network issues authorized address information indicating a source address of a non-attacking packet; and a restricting step, in which the gate device restricts passage of a packet that may attack on the communication device, based on the authorized address information issued by the authorized device.

According to the present invention, the authorized device on the network issues the authorized address information indicating the source address of a non-attacking packet, and the gate device restricts the passage of a packet that may attack on the communication device, based on the authorized address information issued by the authorized device. Therefore, the communication devices can be efficiently protected from denial of service attacks.

Moreover, the denial-of-service attack protecting method of protecting a communication device against a denial of service attack using a gate device or a repeater device, the gate device interposing between the repeater device that forms part of a network and the communication device that is a target of the denial of service attack, comprises an authorized address information acquiring step, in which the gate device acquires the authorized address information indicating a source address of a non-attacking packet transmitted by an authorized device on the network; a normal condition information generating step, in which the gate device generates normal condition information indicating conditions for the non-attacking packet, based on the authorized address information acquired in the authorized address information acquiring step; and a packet restricting step, in which the gate device restricts the passage of a packet that may attack on the communication device, while allowing the passage of a packet that matches the conditions indicated in the normal condition information generated in the normal condition information generating step, among packets received from the network.

According to the present invention, the gate device acquires authorized address information indicating the source address of a non-attacking packet transmitted by the authorized device on the network, generates normal condition information indicating conditions for the non-attacking packet, based on the authorized address information acquired, and restricts the passage of a packet that may attack on the communication device, while allowing the passage of a packet that matches the conditions indicated in the normal condition information generated, among packets received from the network. Therefore, the normal condition information can be efficiently generated, thereby reducing the burden of managing the normal condition information on the operator of the gate device.

Furthermore, in the above denial-of-service attack protecting method, the authorized address information acquiring step includes an address information reporting step, in which the gate device reports address information for its own device to the repeater device, an authorized address information repeating step, in which, when receiving authorized address information from the authorized device, the repeater device repeats the authorized address information to the gate device based on the address information reported in the address information reporting step, and a receiving step, in which the gate device receives the authorized address information.

According to the present invention, the gate device reports address information for its own device to the repeater device. When receiving authorized address information from the authorized device, the repeater device repeats the authorized address information to the gate device based on the address information reported, and the gate device receives the authorized address information. Therefore, the gate device only reports the address information for its own device to the repeater device, thereby acquiring the authorized address information transmitted from the authorized device through the repeater device.

Moreover, in the above denial-of-service attack protecting method, in the address information reporting step, the repeater device, to which the address information for the gate device is reported, repeats the address information for the gate device to another repeater device that is provided adjacent to the repeater device, and in the authorized address information repeating step, when receiving authorized address information from the authorized device, the another repeater device repeats the authorized address information to an adjacent repeater device or the gate device based on the address information for the gate device.

According to the present invention, the repeater device, to which the address information for the gate device is reported, repeats the address information for the gate device to another repeater device adjacent to the repeater device. When receiving authorized address information from the authorized device, another repeater device repeats the authorized address information to an adjacent repeater device or the gate device based on the address information for the gate device. Therefore, the authorized address information can be efficiently repeated up to the gate device while passing through necessary repeater devices.

Furthermore, in the above denial-of-service attack protecting method, the authorized address information acquiring step includes an authorized address information storing step, in which an authorized address information providing device, which integrally manages authorized address information, receives the authorized address information from each authorized device, and stores it, an authorized address information reporting step, in which, when accepting a transmission request for the authorized address information from the gate device, the authorized address information providing device reports the authorized address information requested for its transmission, to the gate device, and a receiving step, in which the gate device receives the authorized address information.

According to the present invention, the authorized address information providing device, which integrally manages authorized address information, previously receives the authorized address information from each authorized device, and stores it. When accepting a transmission request for the authorized address information from the gate device, the authorized address information providing device reports the authorized address information requested for its transmission to the gate device, and the gate device receives the authorized address information. Therefore, the gate device can acquire the authorized address information from the authorized address information providing device whenever required, without previously reporting the address information for the own device.

Moreover, in the above denial-of-service attack protecting method, in the authorized address information acquiring step, the gate device acquires the authorized address information transmitted by an address issuing device that issues an address or by a communication device that is authorized.

According to the present invention, the address issuing device that issues an address or the communication device that is authorized is regarded as an authorized device provided on the network, and the gate device acquires the authorized address information transmitted from either one of the authorized devices. Therefore, the normal condition information can be generated based on the correct authorized address information received from the authorized device, thus protecting against a malicious attack.

Furthermore, the above denial-of-service attack protecting method further comprising an attack detecting step, in which the gate device detects an attack performed by a packet received from the network; a suspicious signature generating step, in which the gate device generates a suspicious signature indicating a feature of the packet as one that has attacked, which is detected in the attack detecting step; a normal condition information storing step, in which the gate device stores the normal condition information generated in the normal condition information generating step, in a normal condition information storage unit; and a normal signature generating step, in which the gate device generates a normal signature indicating a feature of a packet, which matches conditions indicated in the normal condition information, among packets applying to the suspicious signature generated in the suspicious signature generating step, wherein
in the packet restricting step, the gate device restricts the passage of a packet received from the network based on the suspicious signature generated in the suspicious signature generating step and the normal signature generated in the normal signature generating step.

According to the present invention, the gate device detects an attack performed by a packet received from the network, generates the suspicious signature indicating the feature of the packet detected as one that has attacked, stores the normal condition information in the normal condition information storage unit, generates the normal signature indicating the feature of a packet which matches conditions indicated in the normal condition information, among packets applying to the suspicious signature, and restricts the passage of a packet received from the network based on the suspicious signature and the normal signature generated. Therefore, the passage of an attacking packet can be efficiently restricted while using conventional indicators such as the suspicious signature and the normal signature.

Moreover, the above denial-of-service attack protecting method further comprising a signature reporting step, in which the gate device reports the suspicious signature generated in the suspicious signature generating step and the normal signature generated in the normal signature generating step, to the repeater device; and a packet restriction controlling step, in which the repeater device controls restriction to the passage of a packet based on the suspicious signature and the normal signature reported in the signature reporting step.

According to the present invention, the gate device reports the suspicious signature and the normal signature to the repeater device, and the repeater device controls restriction to the passage of a packet based on the suspicious signature and the normal signature reported. Therefore, the passage of an attacking packet can be efficiently restricted also by the repeater device.

Furthermore, the denial-of-service attack protecting method of protecting a communication device against a denial of service attack using a gate device or a repeater device, the gate device interposing between the repeater device that forms part of a network and the communication device that is a target of the denial of service attack, comprising an attack detecting step, in which the gate device detects an attack performed by a packet received from the network; an authorized address information acquiring step, in which, when an attack on the communication device is detected in the attack detecting step, the gate device acquires authorized address information from the repeater device, the authorized address information indicating a source address of a non-attacking packet which is received from an authorized device on the network; and a passage controlling step, in which the gate device controls the passage of a packet based on the normal condition information, indicating conditions for the non-attacking packet, which is generated from the authorized address information received from the repeater device.

According to the present invention, the gate device detects an attack performed by a packet received from the network. When an attack on the communication device is verified, the gate device acquires authorized address information from the repeater device, the authorized address information indicating the source address of the non-attacking packet which is received from the authorized device on the network, and controls the passage of a packet based on the normal condition information, indicating conditions for the non-attacking packet, which is generated from the authorized address information received from the repeater device. Therefore, the authorized address information held by each repeater device can be automatically transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

Moreover, the above denial-of-service attack protecting method further comprising a suspicious signature generating step, in which the gate device generates a suspicious signature indicating a feature of the packet as one that has attacked, which is detected in the attack detecting step, wherein in the authorized address information acquiring step, the gate device transmits the suspicious signature generated in the suspicious signature generating step to the repeater device, and acquires authorized address information sent back in response to the transmission.

According to the present invention, the gate device generates the suspicious signature indicating the feature of the packet detected as one that has attacked, transmits the suspicious signature generated to the repeater device, and acquires authorized address information sent back in response to the transmission. Therefore, a required gate device can efficiently acquire the authorized address information with the transmission of the suspicious signature.

Furthermore, in the above denial-of-service attack protecting method, the passage controlling step includes a normal condition information generating step of generating normal condition information indicating conditions for a non-attacking packet based on the authorized address information acquired in the authorized address information acquiring step, and a packet restricting step of restricting the passage of a packet that may attack on the communication device, while allowing the passage of a packet that matches the conditions indicated in the normal condition information generated in the normal condition information generating step, among packets received from the network.

According to the present invention, the normal condition information indicating the conditions for the non-attacking packet is generated based on the authorized address information acquired, and the passage of a packet that may attack on the communication device is restricted while allowing the passage of a packet that matches the conditions indicated in the normal condition information generated, among packets received from the network. Therefore, the passage control of a normal packet can be performed based on the normal condition information generated from the authorized address information.

Moreover, the above denial-of-service attack protecting method further comprising a normal signature generating step of generating a normal signature indicating a feature of a packet that matches conditions indicated in the normal condition information generated in the normal condition information generating step, wherein in the packet restricting step, the passage of a packet received from the network is restricted based on the suspicious signature generated in the suspicious signature generating step and the normal signature generated in the normal signature generating step.

According to the present invention, the normal signature indicating the feature of a packet which matches the conditions indicated in the normal condition information generated is generated, among packets that apply to the suspicious signature, and the passage of a packet received from the network is restricted based on the suspicious signature and the normal signature generated. Therefore, the passage of a packet can be efficiently controlled using indicators such as the suspicious signature and the normal signature.

Furthermore, the above denial-of-service attack protecting method further comprising a signature forwarding step, in which the gate device forwards the normal signature generated in the normal signature generating step, to the repeater device.

According to the present invention, the gate device transfers the normal signature generated to the repeater device. Therefore, the passage of a packet can be efficiently controlled not only in the gate device but also the repeater device.

Moreover, a denial-of-service attack protecting system protects a communication device against a denial of service attack using a gate device or a repeater device, the gate device interposing between the repeater device that forms part of a network and the communication device that is a target of the denial of service attack. The gate device comprises an authorized address information acquiring unit that acquires authorized address information indicating a source address of a non-attacking packet transmitted by an authorized device on the network; a normal condition information generating unit that generates normal condition information indicating conditions for the non-attacking packet, based on the authorized address information acquired by the authorized address information acquiring unit; and a packet restricting unit that restricts the passage of a packet that may attack on the communication device, while allowing the passage of a packet that matches the conditions indicated in the normal condition information generated by the normal condition information generating unit, among packets received from the network.

According to the present invention, the gate device acquires authorized address information, which indicates the source address of a non-attacking packet, transmitted from the authorized device on the network. Then, the gate device generates the normal condition information indicating conditions for the non-attacking packet, based on the authorized address information acquired, and restricts the passage of a packet which may attack on the communication device while allowing the passage of a packet which matches the conditions indicated in the normal condition information generated, among packets received from the network. Thus, the normal condition information can be efficiently generated.

Furthermore, a denial-of-service attack protecting system protects a communication device against a denial of service attack using a gate device or a repeater device, the gate device interposing between the repeater device that forms part of a network and the communication device that is a target of the denial of service attack. The gate device comprising an attack detecting unit that detects an attack performed by a packet received from the network; an authorized address information acquiring unit that, when an attack on the communication device is detected by the attack detecting unit, acquires authorized address information from the repeater device, the authorized address information indicating a source address of a non-attacking packet which is received from an authorized device on the network; and a passage controlling unit that controls the passage of a packet based on the normal condition information, indicating conditions for the non-attacking packet, which is generated from the authorized address information received from the repeater device.

According to the present invention, the gate device detects an attack performed by the packet received from the network. When the attack is verified, the gate device acquires authorized address information from the repeater device, the authorized address information indicating the source address of the non-attacking packet received from the authorized device on the network, and controls the passage of a packet based on the normal condition information, indicating the conditions for the non-attacking packet, generated from the authorized address information received from the repeater device. Therefore, the authorized address information held by the repeater devices can be automatically transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

Moreover, a gate device that protects a communication device against a denial of service attack, the gate device interposing between a repeater device that forms part of a network and the communication device that is a target of the denial of service attack, comprises an attack detecting unit that detects an attack performed by a packet received from the network; an authorized address information acquiring unit that, when an attack on the communication device is detected by the attack detecting unit, acquires authorized address information from the repeater device, the authorized address information indicating a source address of a non-attacking packet which is received from an authorized device on the network; and a passage controlling unit that controls the passage of a packet based on the normal condition information, indicating conditions for the non-attacking packet, which is generated from the authorized address information received from the repeater device.

According to the present invention, the gate device acquires authorized address information, which indicates the source address of a non-attacking packet, transmitted from the authorized device on the network. Then, the gate device generates the normal condition information indicating conditions for the non-attacking packet, based on the authorized address information acquired, and restricts the passage of a packet which may attack on the communication device while allowing the passage of a packet which matches the conditions indicated in the normal condition information generated, among packets received from the network. Thus, the normal condition information can be efficiently generated.

Furthermore, in the above gate device, the authorized address information acquiring unit includes an address information reporting unit that reports address information for its own device to the repeater device, and a receiving unit that receives the authorized address information from the authorized device sent back by the repeater device in response to the address information for the own device reported by the address information reporting unit.

According to the present invention, the gate device reports the address information for its own device to the repeater device, and receives the authorized address information from the authorized device, returned from the repeater device in response to the address information for the own device reported. Therefore, the gate device only reports the address information for its own device to the repeater device, thereby acquiring the authorized address information transmitted from the authorized device through the repeater device.

Moreover, in the above gate device, the authorized address information acquiring unit includes
an authorized address information transmission requesting unit that issues a transmission request for the authorized address information to an authorized address information providing device that integrally manages authorized address information, and
a receiving unit that receives the authorized address information sent back in response to the transmission request for the authorized address information.

According to the present invention, the gate device issues the transmission request for the authorized address information to the authorized address information providing device that integrally manages the authorized address information, and receives the authorized address information returned in response to the transmission request for the authorized address information. Therefore, the gate device can acquire the authorized address information from the authorized address information providing device whenever required, without previously reporting the address information for the own device thereto.

Furthermore, a gate device that protects a communication device against a denial of service attack, the gate device interposing between a repeater device that forms part of a network and the communication device that is a target of the denial of service attack, comprises an attack detecting unit that detects an attack performed by a packet received from the network; an authorized address information acquiring unit that, when an attack on the communication device is detected by the attack detecting unit, acquires authorized address information from the repeater device, the authorized address information indicating a source address of a non-attacking packet which is received from an authorized device on the network; and a passage controlling unit that controls the passage of a packet based on the normal condition information, indicating conditions for the non-attacking packet, which is generated from the authorized address information received from the repeater device.

According to the present invention, the gate device detects an attack performed by the packet received from the network. When the attack on the communication device is verified, the gate device acquires authorized address information from the repeater device, the authorized address information indicating the source address of the non-attacking packet received from the authorized device on the network, and controls the passage of a packet based on the normal condition information, indicating the conditions for the non-attacking packet, generated from the authorized address information received from the repeater device. Therefore, the gate device can automatically acquire the authorized address information held by each repeater device in response to detection of the attack. Therefore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

Moreover, the above gate device further comprising a suspicious signature generating unit that generates a suspicious signature indicating a feature of the packet as one that has attacked, which is detected by the attack detecting unit. The authorized address information acquiring unit transmits the suspicious signature generated by the suspicious signature generating unit to the repeater device, and acquires authorized address information sent back in response to the transmission.

According to the present invention, the gate device generates the suspicious signature indicating the feature of the packet detected as one that has attacked, transmits the suspicious signature generated to the repeater device, and acquires authorized address information sent back in response to the transmission. Therefore, a required gate device can efficiently acquire the authorized address information with the transmission of the suspicious signature.

Furthermore, in the above gate device, the passage controlling unit includes a normal condition information generating unit that generates normal condition information indicating conditions for a non-attacking packet based on the authorized address information acquired by the authorized address information acquiring unit, and a packet restricting unit that restricts the passage of a packet that may attack on the communication device, while allowing the passage of a packet that matches the conditions indicated in the normal condition information generated by the normal condition information generating unit, among packets received from the network.

According to the present invention, the normal condition information indicating the conditions for the non-attacking packet is generated based on the authorized address information acquired, and the passage of a packet that may attack on the communication device is restricted while allowing the passage of a packet that matches the conditions indicated in the normal condition information generated, among packets received from the network. Therefore, the passage control of a normal packet can be performed based on the normal condition information generated from the authorized address information.

Moreover, a repeater device connected to a gate device that protects a communication device being a target of a denial of service attack, and/or connected to one or more repeater devices that form a network, comprising an address information acquiring unit that acquires address information for the gate device; and an authorized address information repeating unit that repeats authorized address information to the gate device or another adjacent repeater device based on the address information acquired by the address information acquiring unit, when receiving the authorized address information indicating a source address of a non-attacking packet transmitted by an authorized device on the network.

According to the present invention, the repeater device previously acquires the address information for the gate device. When receiving the authorized address information indicating the source address of a non-attacking packet transmitted by the authorized device on the network, the repeater device reports the authorized address information to the gate device or another adjacent repeater device based on the address information acquired. Therefore, the authorized address information can be efficiently reported to the gate device.

Furthermore, a repeater device connected to a gate device that protects a communication device being a target of a denial of service attack, and/or connected to one or more repeater devices that form a network, comprising: an authorized address information storage unit that stores authorized address information indicating a source address of a non-attacking packet received from an authorized device on the network; and a transfer unit that transfers the authorized address information stored in the authorized address information storage unit when the gate device detects an attack on the communication device.

According to the present invention, the authorized address information indicating the source address of a non-attacking packet received from an authorized device on the network is stored. When the attack on the communication device is detected by the gate device, the authorized address information stored is transferred to the gate device that has detected the attack. Therefore, the authorized address information held by each repeater device can automatically be transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

A computer program that causes a gate device to protect a communication device against a denial of service attack, the gate device interposing between a repeater device that forms part of a network and the communication device that is a target of the denial of service attack, the computer program causing the gate device to execute an attack detecting step of detecting an attack performed by a packet received from the network; an authorized address information acquiring of acquiring, when an attack on the communication device is detected in the attack detecting step, authorized address information from the repeater device, the authorized address information indicating a source address of a non-attacking packet which is received from an authorized device on the network; and a passage controlling step of controlling the passage of a packet based on the normal condition information, indicating conditions for the non-attacking packet, which is generated from the authorized address information received from the repeater device.

According to the present invention, the gate device acquires authorized address information, which indicates the source address of a non-attacking packet, transmitted from the authorized device on the network. Then, the gate device generates the normal condition information indicating conditions for the non-attacking packet, based on the authorized address information acquired, and restricts the passage of a packet which may attack on the communication device while allowing the passage of a packet which matches the conditions indicated in the normal condition information generated, among packets received from the network. Thus, the normal condition information can be efficiently generated.

In the above computer-readable recording medium, the authorized address information acquiring step includes an address information reporting step of reporting address information for its own device to the repeater device, and a receiving step of receiving the authorized address information from the authorized device sent back by the repeater device in response to the address information for the own device reported at the address information reporting step.

According to the present invention, the gate device reports the address information for its own device to the repeater device, and receives the authorized address information from the authorized device, returned from the repeater device in response to the address information for the own device reported. Therefore, the gate device only reports the address information for its own device to the repeater device, thereby acquiring the authorized address information transmitted from the authorized device through the repeater device.

In the above computer program, the authorized address information acquiring step includes an authorized address information transmission requesting step of issuing a transmission request for the authorized address information to an authorized address information providing device that integrally manages authorized address information, and a receiving step of receiving the authorized address information sent back in response to the transmission request for the authorized address information.

According to the present invention, the gate device issues the transmission request for the authorized address information to the authorized address information providing device that integrally manages the authorized address information, and receives the authorized address information returned in response to the transmission request for the authorized address information. Therefore, the gate device can acquire the authorized address information from the authorized address information providing device whenever required, without previously reporting the address information for the own device thereto.

A computer program that causes a gate device to protect a communication device against a denial of service attack, the gate device interposing between a repeater device that forms part of a network and the communication device that is a target of the denial of service attack, the computer program causing the gate device to execute an attack detecting step of detecting an attack performed by a packet received from the network; an authorized address information acquiring step of acquiring, when an attack is detected in the attack detecting step, authorized address information from the repeater device, the authorized address information indicating a source address of a non-attacking packet which is received from an authorized device on the network; and a passage controlling step of controlling the passage of a packet based on the normal condition information, indicating conditions for the non-attacking packet, which is generated from the authorized address information received from the repeater device.

According to the present invention, the gate device detects an attack performed by the packet received from the network. When the attack on the communication device is verified, the gate device acquires authorized address information from the repeater device, the authorized address information indicating the source address of the non-attacking packet received from the authorized device on the network, and controls the passage of a packet based on the normal condition information, indicating the conditions for the non-attacking packet, generated from the authorized address information received from the repeater device. Therefore, the gate device can automatically acquire the authorized address information held by each repeater device in response to detection of the attack. Therefore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

In the above computer program, the computer program further causes the gate device to execute a suspicious signature generating step of generating a suspicious signature indicating a feature of the packet as one that has attacked, which is detected by the attack detecting unit. The authorized address information acquiring step includes transmitting the suspicious signature generated at the suspicious signature generating step to the repeater device, and acquires authorized address information sent back in response to the transmission.

According to the present invention, the gate device generates the suspicious signature indicating the feature of the packet detected as one that has attacked, transmits the suspicious signature generated to the repeater device, and acquires authorized address information sent back in response to the transmission. Therefore, a required gate device can efficiently acquire the authorized address information with the transmission of the suspicious signature.

In the above computer program, the passage controlling step includes a normal condition information generating step of generating normal condition information indicating conditions for a non-attacking packet based on the authorized address information acquired in the authorized address information acquiring step, and a packet restricting step of restricting the passage of a packet that may attack on the communication device, while allowing the passage of a packet that matches the conditions indicated in the normal condition information generated in the normal condition information generating step, among packets received from the network.

According to the present invention, the normal condition information indicating the conditions for the non-attacking packet is generated based on the authorized address information acquired, and the passage of a packet that may attack on the communication device is restricted while allowing the passage of a packet that matches the conditions indicated in the normal condition information generated, among packets received from the network. Therefore, the passage control of a normal packet can be performed based on the normal condition information generated from the authorized address information.

A computer program that causes a repeater device connected to a gate device to protect a communication device being a target of a denial of service attack, and/or connected to one or more repeater devices that form a network, the computer program causing the repeater device to execute an address information acquiring step of acquiring address information for the gate device; and an authorized address information repeating step of repeating authorized address information to the gate device or another adjacent repeater device based on the address information acquired at the address information acquiring step, when receiving the authorized address information indicating a source address of a non-attacking packet transmitted by an authorized device on the network.

According to the present invention, the repeater device previously acquires the address information for the gate device. When receiving the authorized address information indicating the source address of a non-attacking packet transmitted by the authorized device on the network, the repeater device reports the authorized address information to the gate device or another adjacent repeater device based on the address information acquired. Therefore, the authorized address information can be efficiently reported to the gate device.

A computer program that causes a repeater device connected to a gate device to protect a communication device being a target of a denial of service attack, and/or connected to one or more repeater devices that form a network, the computer program causing the repeater device to execute an authorized address information storage step of storing authorized address information indicating a source address of a non-attacking packet received from an authorized device on the network; and a transfer step of transferring authorized address information stored at the authorized address information storage step when the gate device detects an attack on the communication device.

According to the present invention, the authorized address information, which indicates the source address of a non-attacking packet, received from the authorized device on the network is stored. When the attack on the communication device is detected by the gate device, the authorized address information stored is transferred to the gate device that has detected the attack. Therefore, the authorized address information held by each repeater device can be automatically transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

### EFFECT OF THE INVENTION

According to the present invention, the authorized device on the network issues the authorized address information indicating the source address of a non-attacking packet, and the gate device restricts the passage of a packet that may attack on the communication device, based on the authorized address information issued by the authorized device. Therefore, the communication devices can be efficiently protected from denial of service attacks.

According to the present invention, the gate device acquires authorized address information indicating the source address of a non-attacking packet transmitted by the authorized device on the network, generates normal condition information indicating conditions for the non-attacking packet, based on the authorized address information acquired, and restricts the passage of a packet that may attack on the communication device, while allowing the passage of a packet that matches the conditions indicated in the normal condition information generated, among packets received from the network. Therefore, the normal condition information can be efficiently generated, thereby reducing the burden of managing the normal condition information on the operator of the gate device.

According to the present invention, the gate device reports address information for its own device to the repeater device. When receiving authorized address information from the authorized device, the repeater device repeats the authorized address information to the gate device based on the address information reported, and the gate device receives the authorized address information. Therefore, the gate device only reports the address information for its own device to the repeater device, thereby acquiring the authorized address information transmitted from the authorized device through the repeater device.

According to the present invention, the repeater device, to which the address information for the gate device is reported, repeats the address information for the gate device to another repeater device adjacent to the repeater device. When receiving authorized address information from the authorized device, another repeater device repeats the authorized address information to an adjacent repeater device or the gate device based on the address information for the gate device. Therefore, the authorized address information can be efficiently repeated up to the gate device while passing through necessary repeater devices.

According to the present invention, the authorized address information providing device, which integrally manages authorized address information, previously receives the authorized address information from each authorized device, and stores it. When accepting a transmission request for the authorized address information from the gate device, the authorized address information providing device reports the authorized address information requested for its transmission to the gate device, and the gate device receives the authorized address information. Therefore, the gate device can acquire the authorized address information from the authorized address information providing device whenever required, without previously reporting the address information for the own device.

According to the present invention, the address issuing device that issues an address or the communication device that is authorized is regarded as an authorized device provided on the network, and the gate device acquires the authorized address information transmitted from either one of the authorized devices. Therefore, the normal condition information can be generated based on the correct authorized address information received from the authorized device, thus protecting against a malicious attack.

According to the present invention, the gate device detects an attack performed by a packet received from the network, generates the suspicious signature indicating the feature of the packet detected as one that has attacked, stores the normal condition information in the normal condition information storage unit, generates the normal signature indicating the feature of a packet which matches conditions indicated in the normal condition information, among packets applying to the suspicious signature, and restricts the passage of a packet received from the network based on the suspicious signature and the normal signature generated. Therefore, the passage of an attacking packet can be efficiently restricted while using conventional indicators such as the suspicious signature and the normal signature.

According to the present invention, the gate device reports the suspicious signature and the normal signature to the repeater device, and the repeater device controls restriction to the passage of a packet based on the suspicious signature and the normal signature reported. Therefore, the passage of an attacking packet can be efficiently restricted also by the repeater device.

According to the present invention, the repeater device previously acquires the address information for the gate device. When receiving the authorized address information indicating the source address of a non-attacking packet transmitted by the authorized device on the network, the repeater device reports the authorized address information to the gate device or another adjacent repeater device based on the address information acquired. Therefore, the authorized address information can be efficiently reported to the gate device.

According to the present invention, the gate device detects an attack performed by a packet received from the network. When an attack on the communication device is verified, the gate device acquires authorized address information from the repeater device, the authorized address information indicating the source address of the non-attacking packet which is received from the authorized device on the network, and controls the passage of a packet based on the normal condition information, indicating conditions for the non-attacking packet, which is generated from the authorized address information received from the repeater device. Therefore, the authorized address information held by each repeater device can be automatically transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

According to the present invention, the gate device generates the suspicious signature indicating the feature of the packet detected as one that has attacked, transmits the suspicious signature generated to the repeater device, and acquires authorized address information sent back in response to the transmission. Therefore, a required gate device can efficiently acquire the authorized address information with the transmission of the suspicious signature.

According to the present invention, the normal condition information indicating the conditions for the non-attacking packet is generated based on the authorized address information acquired, and the passage of a packet that may attack on the communication device is restricted while allowing the passage of a packet that matches the conditions indicated in the normal condition information generated, among packets received from the network. Therefore, the passage control of a normal packet can be performed based on the normal condition information generated from the authorized address information.

According to the present invention, the normal signature indicating the feature of a packet which matches the conditions indicated in the normal condition information generated is generated, among packets that apply to the suspicious signature, and the passage of a packet received from the network is restricted based on the suspicious signature and the normal signature generated. Therefore, the passage of a packet can be efficiently controlled using indicators such as the suspicious signature and the normal signature.

According to the present invention, the gate device transfers the normal signature generated to the repeater device. Therefore, the passage of a packet can be efficiently controlled not only in the gate device but also the repeater device.

According to the present invention, the authorized address information indicating the source address of a non-attacking packet received from an authorized device on the network is stored. When the attack on the communication device is detected by the gate device, the authorized address information stored is transferred to the gate device that has detected the attack. Therefore, the authorized address information held by each repeater device can automatically be transmitted to the gate device that has detected the attack. Furthermore, when the source address of the non-attacking packet that does not attack through the network is added or updated, the normal condition information can be registered only in a required gate device without any waste. Moreover, when a gate device is added to the network, a necessary amount of normal condition information can be registered in the gate device added without any waste.

### BRIEF DESCRIPTION OF DRAWINGS

Fig. 1 is a block diagram of a distributed denial-of-service attack protecting system according to a first embodiment of the present invention;
Fig. 2 is a detailed block diagram of a gate device shown in Fig. 1;
Fig. 3 is a schematic for explaining attack detection conditions according to the first embodiment;
Fig. 4 is a schematic for explaining normal condition information according to the first embodiment;
Fig. 5 is a schematic for explaining abnormal conditions according to the first embodiment;
Fig. 6 is a detailed block diagram of a repeater device shown in Fig. 1;
Fig. 7 is a flowchart of a process procedure for attack detection in the gate device shown in Fig. 2;
Fig. 8 is a flowchart of a process procedure for signature reception in the repeater device shown in Fig. 6;
Fig. 9 is a flowchart of a process procedure for packet restriction in the gate device shown in Fig. 2;
Fig. 10 is a sequence diagram of a process procedure for updating normal condition information in the distributed denial-of-service attack protecting system according to the first embodiment;
Fig. 11 is a block diagram of a distributed denial-of-service attack protecting system according to a second embodiment of the present invention;
Fig. 12 is a detailed block diagram of a gate device shown in Fig. 11;
Fig. 13 is a detailed block diagram of a repeater device shown in Fig. 11;
Fig. 14 is a sequence diagram of a process procedure for updating normal condition information in the distributed denial-of-service attack protecting system according to the second embodiment;
Fig. 15 is a block diagram of a distributed denial-of-service attack protecting system according to a third embodiment of the present invention;
Fig. 16 is a detailed block diagram of a gate device shown in Fig. 15;
Fig. 17 is a schematic for explaining attack detection conditions according to the third embodiment;
Fig. 18 is a schematic for explaining normal condition information according to the third embodiment;
Fig. 19 is a schematic for explaining abnormal conditions according to the third embodiment;
Fig. 20 is a detailed block diagram of a repeater device shown in Fig. 15;
Fig. 21 is a flowchart of a process procedure for attack detection in the gate device shown in Fig. 16;
Fig. 22 is a flowchart of a process procedure for signature reception in the repeater device shown in Fig. 20;
Fig. 23 is a flowchart of a process procedure for packet restriction in the gate device shown in Fig. 16; and
Fig. 24 is a sequence diagram of a process procedure for updating normal condition information in the distributed denial-of-service attack protecting system according to the third embodiment.

### EXPLANATIONS OF LETTERS OR NUMERALS

- 1, 50: Distributed denial-of-service attack protecting system
- 2: Network
- 3, 4, 5, 6, 53, 54, 55, 56: Repeater device
- 7: Communication device
- 8, 58: Gate device
- 9: LAN
- 10, 60: Address issuing server
- 11: Edge router
- 12, 13, 15, 16: Communication device
- 14: LAN
- 20: Attack detector
- 21: Suspicious signature generator
- 22: Normal condition information storage unit
- 23, 73: Normal condition information generator
- 24: Normal signature generator
- 25, 35: Malicious signature generator
- 26, 36: Packet restricting unit
- 27, 77: Signature reporting unit
- 37, 87: Signature repeater
- 28: Network interface
- 30: Input port
- 31: Switch
- 32: Output port
- 38: Address information storage unit
- 39: Authorized address information transmitter
- 59: Authorized address information storage unit
- 101: Distributed denial-of-service attack protecting system
- 102: Network
- 103, 104, 105, 106: Repeater device
- 107: Communication device
- 108: Gate device
- 109: LAN
- 110: Address issuing server
- 111: Edge router
- 112, 113, 115, 116: Communication device
- 114: LAN
- 120: Attack detector
- 121: Suspicious signature generator
- 122: Normal condition information storage unit
- 123: Normal condition information generator
- 124: Normal signature generator
- 125, 135: Malicious signature generator
- 126, 136: Packet restricting unit
- 127, 137: Signature transfer unit
- 128: Network interface
- 130: Input port
- 131: Switch
- 132: Output port
- 138: Address information storage unit
- 139: Authorized address information transmitter

### BEST MODE(S) FOR CARRYING OUT THE INVENTION

Exemplary embodiments of a denial-of-service attack protecting method, a denial-of-service attack protecting device, a repeater device, a denial-of-service attack protecting program, and a program for the repeater device according to the present invention are explained in detail below with reference to the attached drawings. In the followings, a first embodiment of the present invention relates to a case where an address issuing server issues an authorized-address-information transfer request to a repeater device. A second embodiment of the present invention relates to a case where a gate device issues an authorized-address-information transmission request for authorized address information, to an authorized address information providing server that integrally manages the authorized address information. A third embodiment of the present invention related to a case where the gate device transmits a suspicious signature to the repeater device, and acquires authorized address information as a response thereto.

### First Embodiment

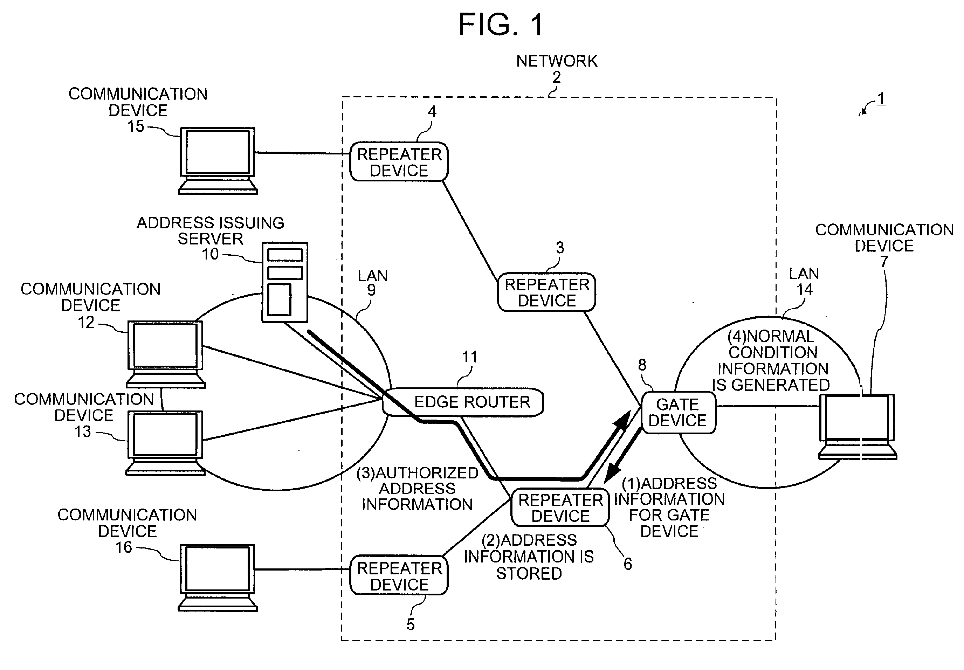

Fig. 1 is a block diagram of a distributed denial-of-service attack protecting system 1 according to a first embodiment. The distributed denial-of-service attack protecting system 1 is a system that protects a communication device 7 against a distributed denial of service attack mainly by a gate device 8. More specifically, the gate device 8 acquires authorized address information, which indicates a source address of a non-attacking packet, transmitted from an authorized device (address issuing server 10) on a network 2. Then, the gate device 8 generates normal condition information indicating conditions for a non-attacking packet, based on the authorized address information acquired, and restricts the passage of a packet which may attack on the communication device 7 while allowing the passage of a packet which matches the conditions indicated in the normal condition information, among packets received from the network. A normal signature and a suspicious signature generated by the gate device 8 based on the normal condition information are repeated to a repeater device 6, which allows the repeater device to subject packets to filtering.

Conventionally, adding and changing the authorized address information are managed by an operator of the gate device 8, and this makes the management of the normal condition information complicated. Therefore, in the first embodiment, the burden of addition of the authorized address information is not put on the operator of the gate device 8, but it is configured to acquire the authorized address information from an authorized terminal such as the address issuing server 10. Hence, according to the first embodiment, the management burden on the operator of the gate device 8 can be reduced.

The gate device 8 acquires authorized address information in the following manner. In the first embodiment, the gate device 8 reports address information for its own device to the repeater device 6 (step (1) of Fig. 1), and the repeater device 6 stores the address information (step (2) of Fig. 1). When the repeater device 6 receives an authorized-address-information transfer request (including authorized address information) issued from the address issuing server 10, the repeater device 6 repeats the authorized address information to the gate device 8 based on the address information previously stored (step (3) of Fig. 1). Then, the gate device 8 automatically generates normal condition information based on the authorized address information received (step (4) of Fig. 1).

The system construction of the distributed denial-of-service attack protecting system 1 is explained below. The distributed denial-of-service attack protecting system 1 includes repeater devices 3 to 5 and the repeater device 6 that repeat a packet to be transmitted through the network 2, and the gate device 8 that restricts the passage of a packet to be transmitted to the communication device 7 through the network 2. The construction of the distributed denial-of-service attack protecting system 1 is only one example, and hence, the number of repeater devices and gate devices and the way to construct networks are not restricted.

The gate device 8 includes a gateway device that is an inter-network connection device, and is connected to a Local Area Network (hereinafter, "LAN") 14 that includes the communication device 7 formed with a computer or the like. Each of the repeater devices 3 to 6 includes a router. The repeater devices 3 to 6 may also be configured in a bridge mode.

The repeater device 3 is connected to the repeater device 4 and the gate device 8, the repeater device 4 is connected to a communication device 15 and the repeater device 3, the repeater device 5 is connected to a communication device 16 and the repeater device 6, and the repeater device 6 is connected to the repeater device 5, an edge router 11, and to the gate device 8.

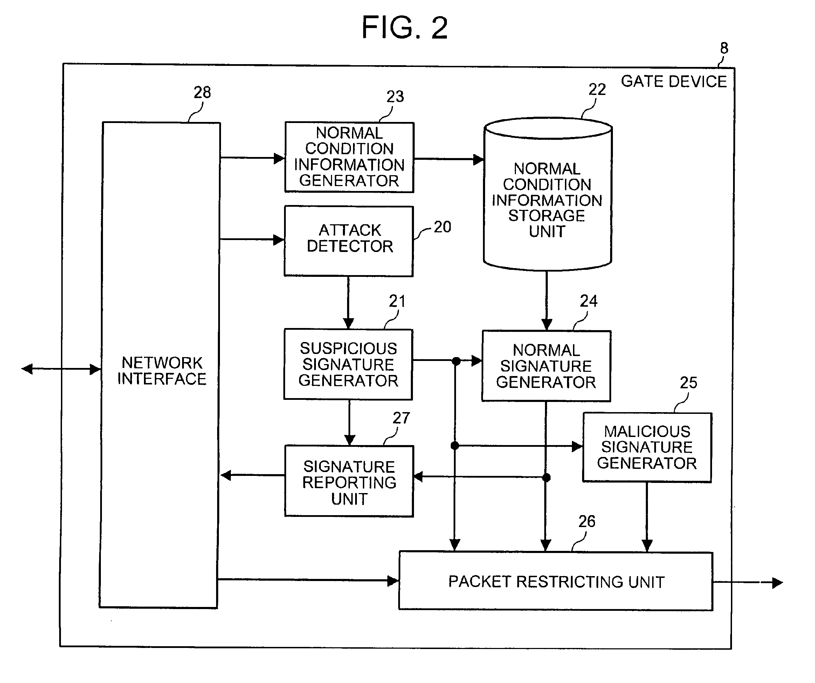

Fig. 2 is a detailed block diagram of the gate device 8. The gate device 8 includes an attack detector 20 that detects an attack performed by a packet received from the network 2; a suspicious signature generator 21 that generates a suspicious signature indicating a feature of a packet detected as one that has attacked; a normal condition information storage unit 22 that stores normal condition information indicating conditions for a packet (non-attacking packet) being not regarded as one that attacks on the communication device 7; a normal condition information generator 23 that generates normal condition information to be stored in the normal condition information storage unit 22; a normal signature generator 24 that generates a normal signature indicating a feature of a packet which matches the conditions indicated in the normal condition information, among packets that apply to the suspicious signature; a malicious signature generator 25 that generates a malicious signature indicating a feature of a packet, which is regarded as one attacking on the communication device 7, among packets that apply to the suspicious signature; a packet restricting unit 26 that restricts the passage of a packet received from the network 2 based on the suspicious signature, the normal signature, and the malicious signature; a signature reporting unit 27 that reports the suspicious signature and the normal signature to the repeater device 3 and the repeater device 6, each of which is provided in an adjacent relation to the gate device 8; and a network interface 28 that performs communications with devices connected to the network 2.

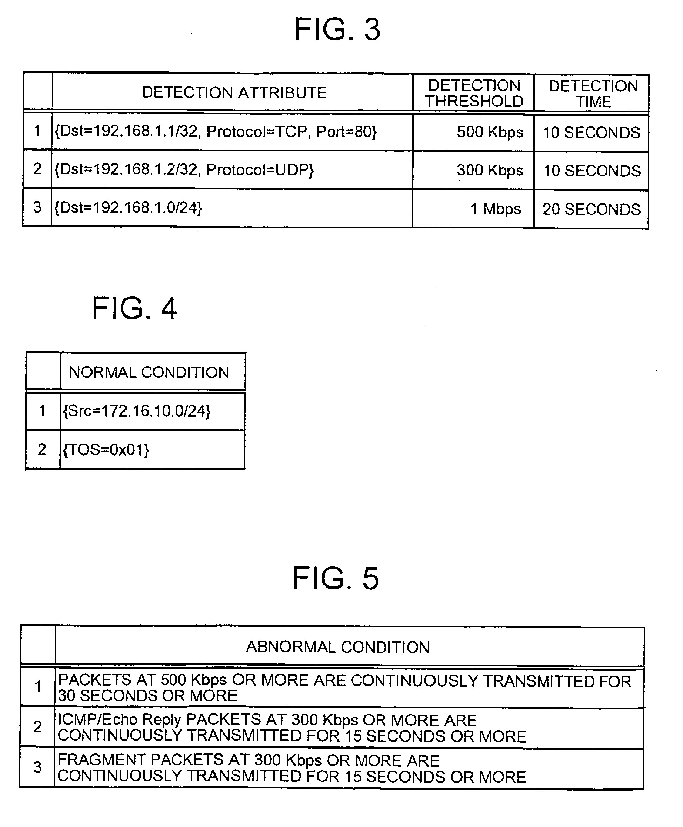

The attack detector 20 is a processor that detects an attack based on preset attack detection conditions. Fig. 3 is a schematic for explaining the attack detection conditions. The attack detection condition consists of three groups of records such as detection attribute, detection threshold, and detection time. The detection attribute indicates an attribute of a target packet for detection, the detection threshold indicates a threshold of a transmission rate of a target packet for detection, and the detection time indicates a threshold of time during which the transmission rate of the target packet for detection continues to exceed the detection threshold.

For example, in a first detection condition, a target for detection is a packet as follows: destination address information is 192.168.1.1 (Dst=192.168.1.1/32), a transport layer protocol is TCP (Transmission Control Protocol) (Protocol=TCP), and a TCP port number is 80 (Prot=80). When a state, where the transmission rate of the packet as the target for detection has exceeded 500 kbps, continues for 10 seconds or longer, it is detected as an attack by the target packet for detection.

Likewise, in a second detection condition, a target for detection is a packet as follows: destination address information is 192.168.1.2 (Dst=192.168.1.2/32), and a transport layer protocol is UDP (User Datagram Protocol) (Protocol=UDP). When a state, where the transmission rate of the packet as the target for detection has exceeded 300 kbps, continues for 10 seconds or longer, it is detected as an attack by the target packet for detection.

Furthermore, in a third detection condition, a target for detection is a packet as follows: destination address information is in a range of 192.168.1.0 to 192.168.1.255 (Dst=192.168.1.0/24). When a state, where the transmission rate of the packet as the target for detection has exceeded 1 Mbps, continues for 20 seconds or longer, it is detected as an attack by the target packet for detection.

When the attack by the target packet for detection is detected by the attack detector 20, the suspicious signature generator 21 generates a suspicious signature indicating the feature of the target packet for detection. For example, when the attack, which matches the first detection condition of the attack detection conditions shown in Fig. 3, is detected, the suspicious signature generator 21 generates a suspicious signature indicating the packet in which the destination address information is 192.168.1.1, the transport layer protocol is TCP, and the TCP port number is 80. The suspicious signature may also include processes such as shaping and filtering performed on a target packet, and parameters for the processes.

The normal condition information storage unit 22 is formed with a nonvolatile storage medium such as a flash memory. Fig. 4 is a schematic for explaining normal condition information to be stored in the normal condition information storage unit 22. The normal condition information includes normal conditions being conditions that are not regarded as an attack.

For example, a packet (Src=172.16.10.0/24), of which source address information is in a range of 172.16.10.0 to 172.16.10.255, is not regarded as an attack, based on a first normal condition. Likewise, a packet, of which a service type (Type of Service) is 0x01 (TOS=0x01), is not regarded as an attack based on a second normal condition.

The normal condition information generator 23 is a processor being the most important feature of the first embodiment, and automatically updates the normal condition information stored in the normal condition information storage unit 22 without performance of the processes by the operator. Conventionally, the management of the normal condition information is left to the operator, but in the first embodiment, the normal condition information is automatically updated.

More specifically, when the authorized address information indicating a source address of a packet, which does not attack through the network 2, is transmitted from any one of the repeater devices 3 to 6 and is received by the network interface 28, the normal condition information generator 23 generates normal condition information based on the authorized address information, and updates the normal condition information stored in the normal condition information storage unit 22, with the normal condition information generated. In other words, the packet, having the authorized address information as a transmission address, is not regarded as one that attacks on the communication device 7. Here, automatic addition of the normal condition information is emphasized, but the normal condition information stored in the normal condition information storage unit 22 may be edited, for example, added, deleted, and changed by the operator of the gate device 8.

The normal signature generator 24 is a processor that generates a normal signature indicating a packet, which matches the conditions indicated in the normal condition information, among packets that apply to the suspicious signature generated by the suspicious signature generator 21.

For example, when an attack, which matches the first attack detection condition of Fig. 3, is detected by the attack detector 20, the normal signature generator 24 generates both a normal signature indicating the packet in which the destination address information is 192.168.1.1, the transport layer protocol is TCP, the TCP port number is 80, and the source address information is in a range of 172.16.10.0 to 172.16.10.255; and a normal signature indicating the packet in which the destination address information is 192.168.1.1, the transport layer protocol is TCP, the TCP port number is 80, and the service type is 0x01, based on the normal condition information of Fig. 4.

The malicious signature generator 25 is a processor that generates a malicious signature indicating the feature of a packet which matches abnormal conditions, among packets that apply to the suspicious signature generated in the suspicious signature generator 21.

Fig. 5 is a schematic for explaining the abnormal conditions. As shown in Fig. 5, a first abnormal condition relates to transmitting packets continuously for 30 seconds or longer at a transmission rate of 500 kbps or more. Likewise, a second abnormal condition relates to transmitting ICMP (Internet Control Message Protocol) Echo-Reply packets continuously for 15 seconds or longer at a transmission rate of 300 kbps or more. A third abnormal condition relates to transmitting fragment packets, which are divided, continuously for 15 seconds or longer at a transmission rate of 300 kbps or more.

The packet restricting unit 26 restricts the passage of packets received by the network interface 28, based on the suspicious signature generated by the suspicious signature generator 21, the normal signature generated by the normal signature generator 24, and the malicious signature generated by the malicious signature generator 25.

More specifically, the packet restricting unit 26 abandons the packet that applies to the malicious signature, passes the packet that applies to the normal signature without any restriction thereto, and passes the packet that applies to the suspicious signature through a path in which a transmission bandwidth is restricted, based on the processes indicated in the suspicious signature.

The signature reporting unit 27 is a processor that reports the suspicious signature and the normal signature to the repeater device 3 and the repeater device 6, each of which is provided in an adjacent relation to the gate device 8. The repeater device 3 and the repeater device 6 further repeat the packet to adjacent repeater devices, respectively. The adjacent relation indicates an adjacent relation to the gate device and to each of the repeater devices according to the present invention, which is different from a physical connection relation.

The signature reporting unit 27 reports the address information for the gate device 8, similarly to the suspicious signature and the normal signature, to the repeater device 3 and the repeater device 6, each of which is provided in the adjacent relation thereto. The repeater device 3 and the repeater device 6 further repeat the address information for the gate device 8 to adjacent repeater devices respectively. The address information for the gate device 8 can be reported by the signature reporting unit 27 in response to its startup by the operator of the gate device 8, and this may be performed periodically.

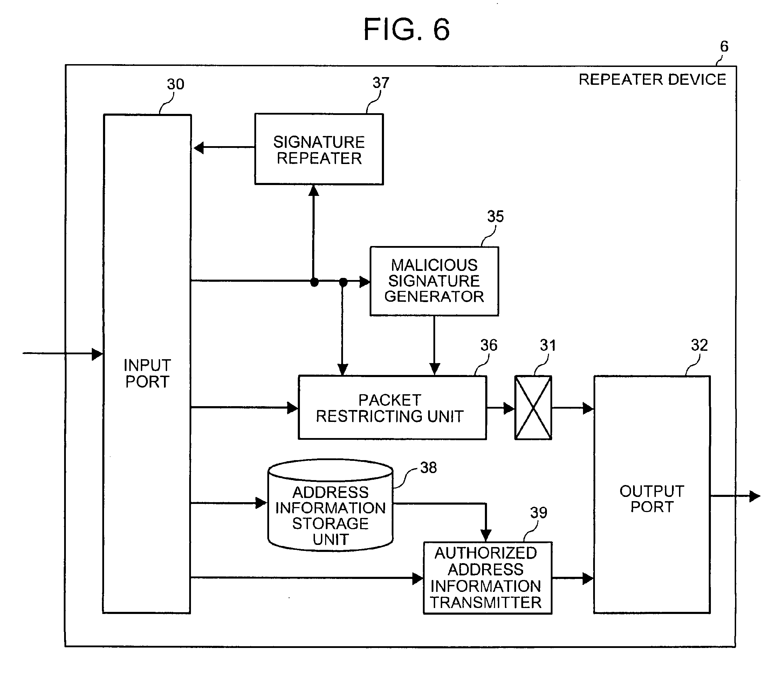

Fig. 6 is a detailed block diagram of the repeater device 6. Although the configuration of only the repeater device 6 is explained below, the repeater devices 3 to 5 have similar configuration. The repeater device 6 includes an input port 30; a switch 31 for routing a packet; an output port 32; a malicious signature generator 35 that generates a malicious signature; a packet restricting unit 36 that restricts the passage of a packet input to the input port 30, based on the malicious signature, and the suspicious signature and the normal signature reported by the gate device 8; a signature repeater 37 that repeats the suspicious signature and the normal signature to the repeater device 5 which is provided in the adjacent relation to the repeater device 6; an address information storage unit 38 that stores address information of the gate device 8; and an authorized address information transmitter 39 that transmits authorized address information based on the address information for the gate device 8 stored in the address information storage unit 38.

The malicious signature generator 35, the packet restricting unit 36, and the signature repeater 37 are configured in the same manner as those of the malicious signature generator 25, the packet restricting unit 26, and the signature reporting unit 27, respectively, which form the gate device 8, and hence, detailed explanation thereof is omitted. The repeater device 6 may include the attack detector, the suspicious signature generator, the normal condition information storage unit, and the normal signature generator in the same manner as the gate device 8.

The signature repeater 37 determines whether a packet, applying to the suspicious signature which exceeds the restricted transmission rate, is received by the input port 30 after the passage of the packet is restricted by the packet restricting unit 36. If it is determined that the packet applying to the suspicious signature which exceeds the restricted transmission rate is received by the input port 30, the signature repeater 37 repeats the suspicious signature and the normal signature. If it is determined that the packet, applying to the suspicious signature which exceeds the restricted transmission rate, is not received by the input port 30, the signature repeater 37 does not repeat the suspicious signature and the normal signature.

In the construction of Fig. 1, because the repeater device 4 and the repeater device 5 do not include a repeater device that repeats the suspicious signature and the normal signature, the suspicious signature and the normal signature are not repeated by the signature repeater 37.

When the attack is detected by the gate device 8 in the above manner, a suspicious signature and a normal signature are generated, and the suspicious signature and the normal signature generated are reported to the repeater devices 3 to 6, and the packet is subjected to processing such as shaping and filtering in the gate device 8 and the repeater devices 3 to 6. Therefore, in the distributed denial-of-service attack protecting system 1, for example, when the attack detected by the gate device 8 is performed through the communication device 15, the passage of a packet that attacks is restricted by a repeater device near an attack source, i.e. by the repeater device 4, thus reducing bad influence due to the packet that attacks.

The address information storage unit 38 is formed with a nonvolatile storage medium, and stores address information for the gate device 8 reported and repeated through the signature reporting unit 27 of the gate device 8 and the signature repeater 37 of each repeater device. The gate device 8 is shown as one unit in Fig. 1, however, the distributed denial-of-service attack protecting system 1 according to the first embodiment can be configured with a plurality of gate devices. In this case, the address information storage unit 38 stores address information for the respective gate devices.

As shown in Fig. 1, LAN 9 is connected to the network 2 through the edge router 11, and is also connected with communication devices 12 and 13. The communication devices 12 and 13 are, for example, ordinary computers. It is assumed that no attack is performed through the network 2 in the LAN 9.

The address issuing server 10 connected to the LAN 9 transmits address information for the LAN 9 or an authorized-address-information transfer request including address information for the communication devices 12 and 13 connected to the LAN 9, to the repeater device 6. The address issuing server 10 may periodically transmits the authorized-address-information transfer request, or may transmit it in response to its startup by the operator of the address issuing server 10. In addition to the address issuing server 10, any device such as the edge router 11 that forms the LAN 9 may transmit the authorized-address-information transfer request to the repeater device.

Referring to Fig. 6, the authorized address information transmitter 39 transmits, in response to the authorized-address-information transfer request issued by the address issuing server 10, address information i.e. authorized address information included in the authorized-address-information transfer request, to the respective gate devices based on the address information for the gate devices stored in the address information storage unit 38.

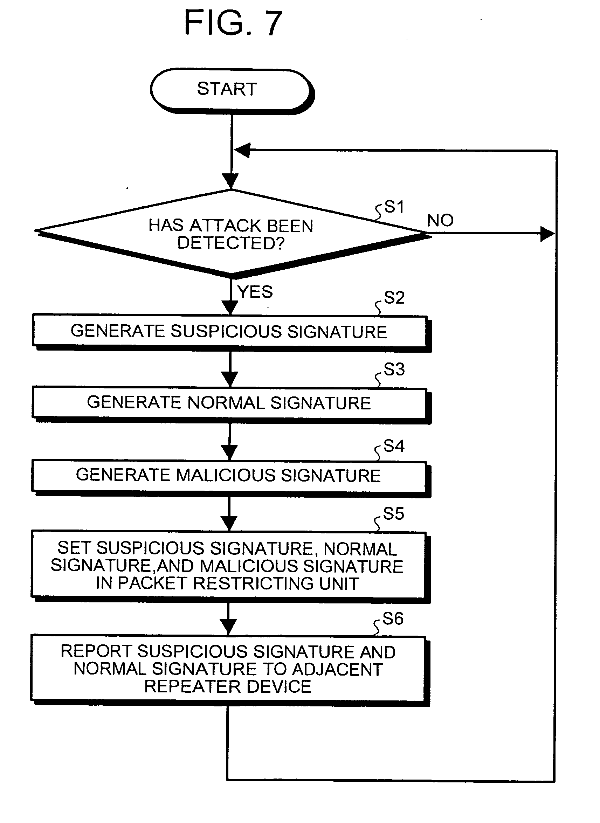

The operation of the distributed denial-of-service attack protecting system 1 configured in the above manner is explained below with reference to Fig. 7 to Fig. 10. Fig. 7 is a flowchart of a process procedure for attack detection in the gate device 8.

At first, when the attack detector 20 detects an attack by a packet received by the network interface 28 based on the attack detection conditions (step S1), the suspicious signature generator 21 generates a suspicious signature indicating the feature of a packet detected as one that attacks (step S2).

Then, the normal signature generator 24 generates a normal signature indicating the feature of a packet, which matches the conditions indicated in the normal condition information, among packets applying to the suspicious signature (step S3). The malicious signature generator 25 generates a malicious signature indicating the feature of a packet, which matches the abnormal conditions, among packets applying to the suspicious signature (step S4).

The suspicious signature, the normal signature, and the malicious signature are set in the packet restricting unit 26 as the packet passage conditions (step S5). The suspicious signature and the normal signature are further reported by the signature reporting unit 27 to the repeater device 3 and the repeater device 6, each of which is provided in the adjacent relation to the gate device 8 (step S6).

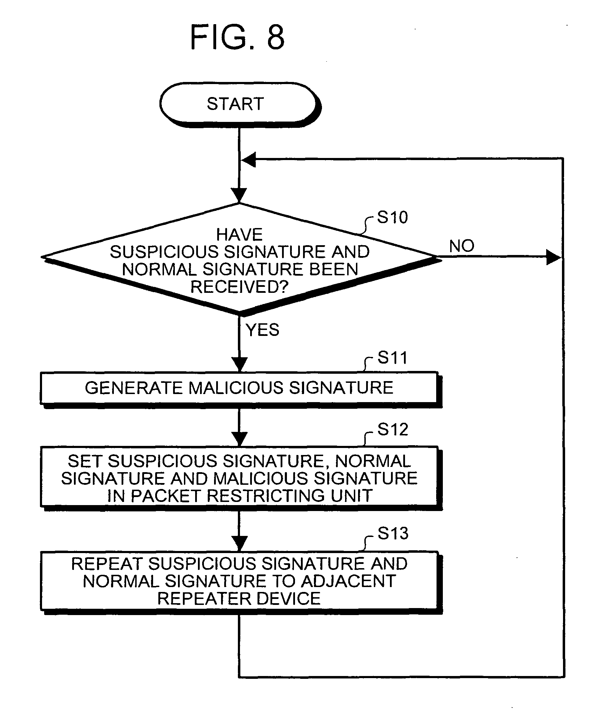

Fig. 8 is a flowchart of a process procedure for signature reception in the repeater device 6. At first, when the suspicious signature and the normal signature are received by the input port 30 (step S10), the malicious signature generator 35 generates a malicious signature indicating the feature of a packet, which matches the abnormal conditions, among packets applying to the suspicious signature received (step S11).

Then, the suspicious signature, the normal signature, and the malicious signature are set in the packet restricting unit 36 as the packet passage conditions (step S12). The suspicious signature and the normal signature are further reported by the signature repeater 37 to the adjacent repeater device 5 (step S13).

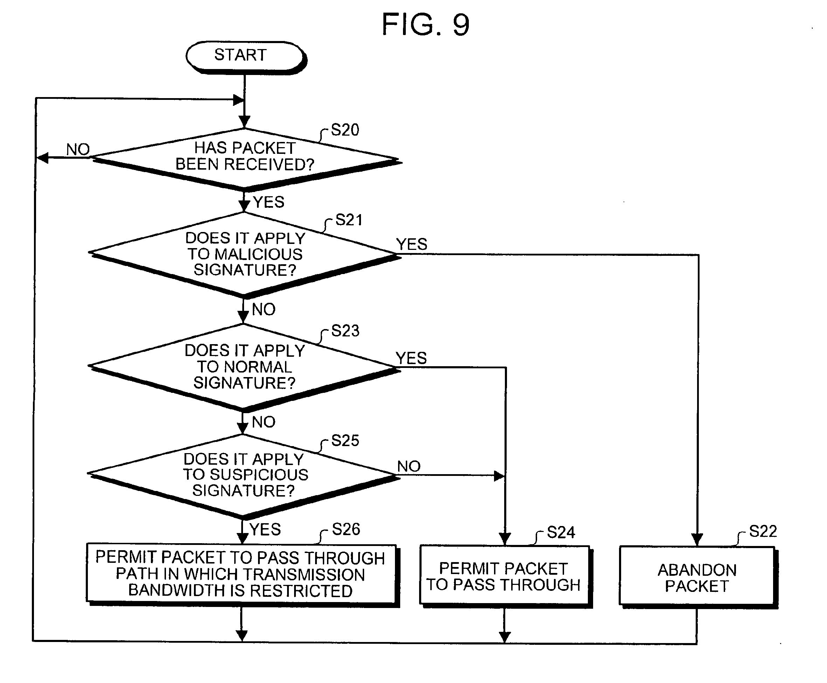

Fig. 9 is a flowchart of a process procedure for packet restriction in the gate device 8. At first, when a packet is received by the network interface 28 (step S20), the packet restricting unit 26 determines whether the packet received applies to the malicious signature (step S21).

When it is determined that the packet applies to the malicious signature, the packet restricting unit 26 abandons the packet (step S22). On the other hand, when it is determined that the packet does not apply to the malicious signature, the packet restricting unit 26 determines whether the packet applies to the normal signature (step S23).

When it is determined that the packet applies to the normal signature, the packet restricting unit 26 permits the packet to pass through (step S24). On the other hand, when it is determined that the packet does not apply to the normal signature, the packet restricting unit 26 determines whether the packet applies to the suspicious signature (step S25).

When it is determined that the packet applies to the suspicious signature, the packet restricting unit 26 permits the packet to pass through a path in which a transmission bandwidth is restricted based on the processes indicated in the suspicious signature (step S26). On the other hand, when it is determined that the packet does not apply to the suspicious signature, the packet restricting unit 26 permits the packet to pass through (step S24). The operation for packet restriction in the repeater devices 3 to 6 is the same as that of the gate device 8, and hence, explanation thereof is omitted.

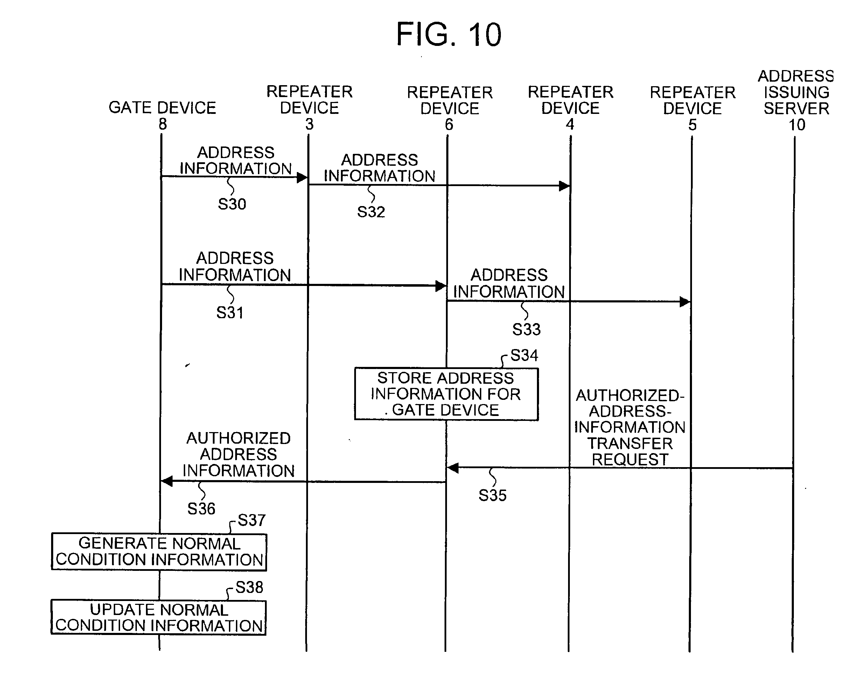

Fig. 10 is a sequence diagram of a process procedure for updating normal condition information in the distributed denial-of-service attack protecting system 1. At first, the signature reporting unit 27 of the gate device 8 reports the address information for the gate device 8 to the repeater device 3 and the repeater device 6 (steps S30, S31). The address information for the gate device 8 reported to the repeater device 3 is repeated to the repeater device 4 by the signature repeater 37 of the repeater device 3 (step S32).

The address information for the gate device 8 reported to the repeater device 6 is repeated to the repeater device 5 by the signature repeater 37 of the repeater device 6 (step S33), and stored in the address information storage unit 38 (step S34). It is noted that the address information for the gate device 8 is also stored in the address information storage units 38 of the repeater devices 3 to 5, respectively, but the steps are not shown here.

When the address issuing server 10 of the LAN 9 transmits an authorized-address-information transfer request to the repeater device 6 (step S35), the repeater device 6 transmits the authorized address information included in the authorized-address-information transfer request, based on the address information for the gate device 8 stored in the address information storage unit 38 (step S36).

When the authorized address information is received by the network interface 28, the normal condition information generator 23 generates normal condition information based on the authorized address information received (step S37), and updates the normal condition information stored in the normal condition information storage unit 22 with the normal condition information generated (step S38).

As explained above, in the distributed denial-of-service attack protecting system 1, the authorized address information, which indicates the source address of the packet that does not attack through the network 2, is transmitted to the gate device 8. And the normal condition information, which indicates the conditions for the packet being not regarded as one that attacks on the communication device 7, is updated based on the authorized address information transmitted to the gate device 8, thereby easily managing the normal condition information.

### Second Embodiment

In the first embodiment, when the gate device 8 is to acquire authorized address information, the address information for the gate device 8 is stored in the repeater device 6. Then, when receiving the authorized-address-information transfer request (including authorized address information) issued from the address issuing server 10, the repeater device 6 repeats the authorized address information to the gate device 8 based on the address information previously stored, so that the gate device 8 acquires the authorized address information. However, the present invention is not limited to the above case. Therefore, in a second embodiment of the present invention, the following case is explained below. In this case, an authorized address information providing server that integrally manages authorized address information is provided, and a gate device acquires authorized address information in response to the request to the authorized address information providing server.

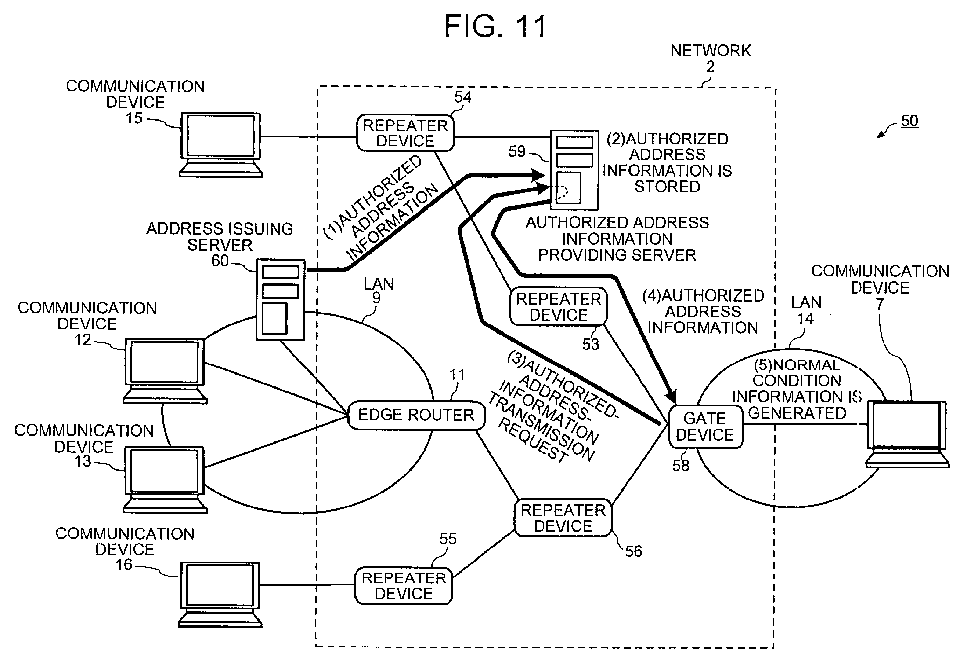

Fig. 11 is a block diagram of a distributed denial-of-service attack protecting system 50 according to a second embodiment of the present invention. The same reference signs are assigned to the same components as those in the distributed denial-of-service attack protecting system 1 according to the first embodiment, and explanation thereof is omitted.

In the distributed denial-of-service attack protecting system 50, authorized address information is provided from an authorized address information providing server 59 that integrally manages the authorized address information, to a gate device 58. More specifically, an address issuing server 60 previously reports authorized address information to the authorized address information providing server 59 (step (1) of Fig. 11), to store the authorized address information in the authorized address information providing server 59 (step (2) of Fig. 11). When an authorized-address-information transmission request is issued from the gate device 58 to the authorized address information providing server 59 (step (3) of Fig. 11), the authorized address information providing server 59 transmits the authorized address information to the gate device 58 (step (4) of Fig. 11), and the gate device 58 automatically generates the normal condition information based on the authorized address information received (step (5) of Fig. 11). Here, the case, where the authorized address information providing server 59 stores the authorized address information issued from the address issuing server 60, is shown for convenience in explanation, but the authorized address information providing server 59 also stores the authorized address information issued from another address issuing server or from a communication device, which is an authorized terminal. For example, if it is authenticated that a communication device 16 of Fig. 11 is an authorized device that does not transmit a packet to attack on a communication device 17, the authorized address information providing server 59 also stores the authorized address information issued from the communication device 16.

The system construction of the distributed denial-of-service attack protecting system 50 is explained below. The distributed denial-of-service attack protecting system 50 includes a plurality of repeater devices 53 to 56 that repeat a packet to be transmitted through the network 2, the gate device 58 that restricts the passage of a packet to be transmitted to the communication device 7 through the network 2, and the authorized address information storage unit 59 that stores the authorized address information indicating the source address of a packet that does not attack through the network 2. The construction of the distributed denial-of-service attack protecting system 50 is only an example. In other words, the number of repeater devices and gate devices and the way to construct networks are not restricted to those shown in the figures.

The gate device 58 includes a gateway device, and is connected to the LAN 14. Each of the repeater devices 53 to 56 includes a router. The repeater devices 53 to 56 may also be configured in a bridge mode, respectively.

Here, the repeater device 53 is connected to the repeater device 54 and the gate device 58. The repeater device 54 is connected to the communication device 15, the repeater device 53, and the authorized address information storage unit 59. The repeater device 55 is connected to the communication device 16 and the repeater device 56. The repeater device 56 is connected to the repeater device 55, the edge router 11, and the gate device 58.

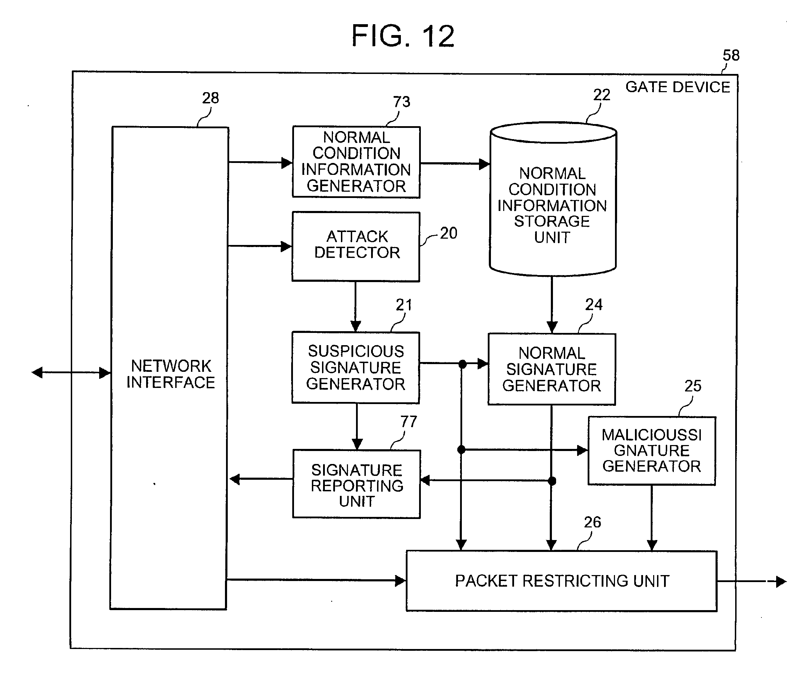

Fig. 12 is a detailed block diagram of the gate device 58. The gate device 58 includes the attack detector 20; the suspicious signature generator 21; the normal condition information storage unit 22; a normal condition information generator 73 that generates normal condition information to be stored in the normal condition information storage unit 22; the normal signature generator 24; the malicious signature generator 25; the packet restricting unit 26; a signature reporting unit 77 that reports the suspicious signature and the normal signature to the repeater device 3 and the repeater device 6, each of which is provided in the adjacent relation to the gate device 58; and the network interface 28.

The normal condition information generator 73 transmits an authorized-address-information transmission request that requests transmission of authorized address information, to the authorized address information storage unit 59. When the network interface 28 receives the authorized address information transmitted by the authorized address information storage unit 59 in response to the authorized-address-information transmission request, the normal condition information generator 73 generates normal condition information based on the authorized address information, and updates the normal condition information stored in the normal condition information storage unit 22, with the normal condition information generated. Transmission of the authorized-address-information transmission request by the normal condition information generator 73 may be performed in response to its startup by the operator of the gate device 58, or may be periodically performed. The signature reporting unit 77 does not report address information for a gate device to a repeater device, unlike the signature reporting unit 27 which forms the gate device 8 as explained in the first embodiment.

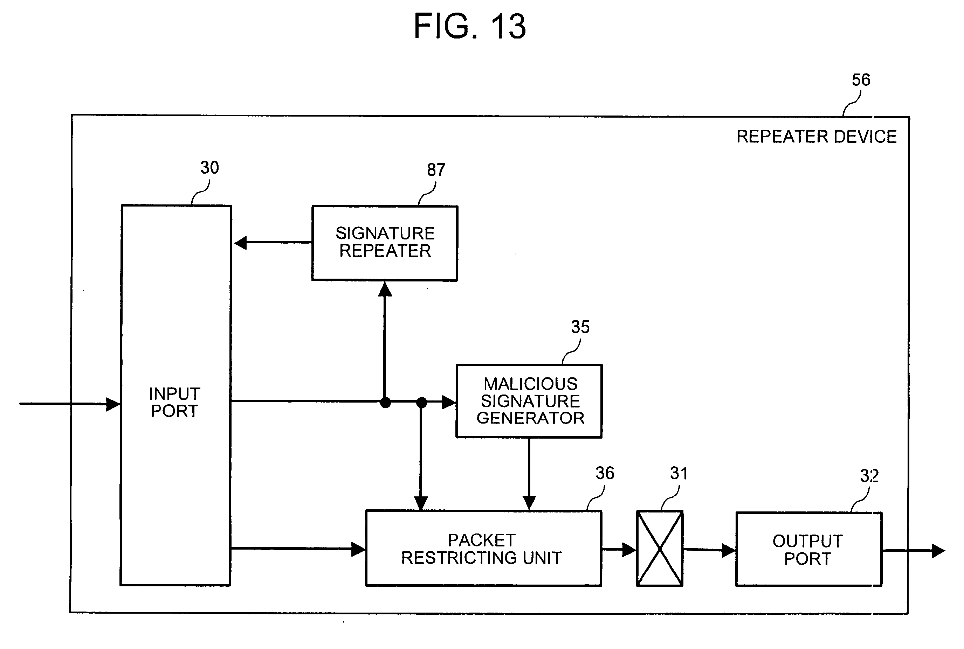

Fig. 13 is a detailed block diagram of the repeater device 56. Although the configuration of the repeater device 56 is explained below for convenience in explanation, the other repeater devices 53 to 55 are also configured in the same manner as that of the repeater device 56. The repeater device 56 includes the input port 30, the switch 31, the output port 32, the malicious signature generator 35, the packet restricting unit 36, and a signature repeater 87 that repeats the suspicious signature and the normal signature to the adjacent repeater device 5.

The signature repeater 87 is configured in the same manner as that of the signature reporting unit 77 that forms the gate device 58, and hence, detailed explanation thereof is omitted. Similarly to the gate device 58, the repeater device 56 may include the attack detector, the suspicious signature generator, the normal condition information storage unit, and the normal signature generator.

Referring to Fig. 11, the address issuing server 60 connected to the LAN 9 registers the address information for the LAN 9 or the address information for the communication devices 12 and 13 connected to the LAN 9, i.e. the authorized address information, in the authorized address information storage unit 59.

The address issuing server 60 may periodically registers the authorized address information or may register it in response to its startup by the operator of the address issuing server 60. In addition to the address issuing server 60, any device such as the edge router 11 that forms the LAN 9 may register the authorized address information.

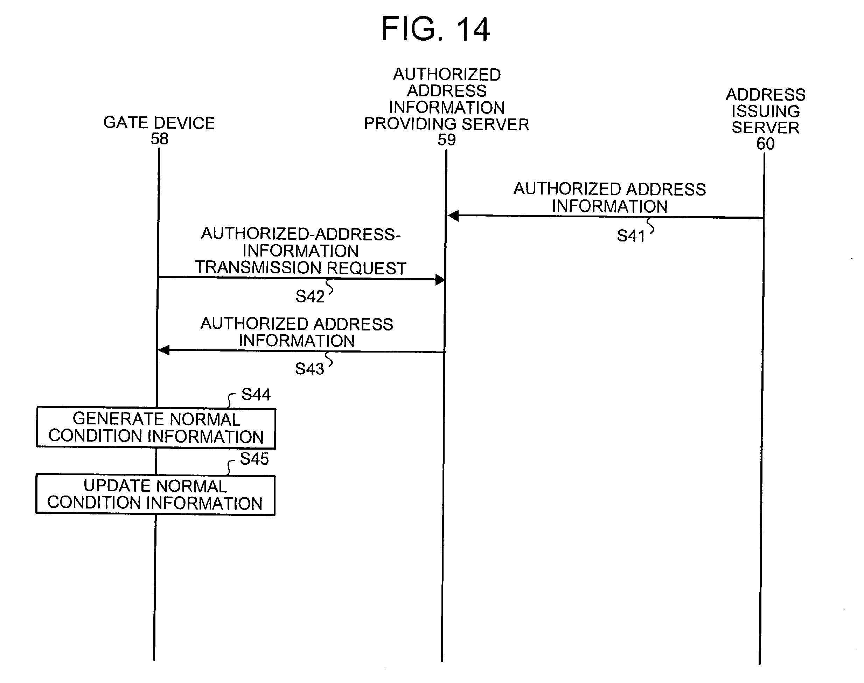

The operation of the distributed denial-of-service attack protecting system 50 configured in the above manner is explained below with reference to Fig. 14. It is noted that a process procedure for attack detection in the gate device 58, a process procedure for the signature reception in the respective repeater devices 53 to 56, and a process procedure for the packet restriction in the gate device 58 are the same as these explained with reference to Fig. 7 to Fig. 9, and hence, explanation thereof is omitted.

Fig. 14 is a sequence diagram of a process procedure for updating normal condition information for the distributed denial-of-service attack protecting system 50 according to the second embodiment. At first, the authorized address information transmitted from the address issuing server 60 is stored in the authorized address information providing server 59 (step S41). When an authorized-address-information transmission request is transmitted by the normal condition information generator 73 of the gate device 58 to the authorized address information storage unit 59 (step S42), the authorized address information is transmitted from the authorized address information storage unit 59 to the gate device 58 in response to the authorized-address-information transmission request (step S43).

When the authorized address information is received by the network interface 28 of the gate device 58, the normal condition information generator 73 generates normal condition information based on the authorized address information received (step S44), and updates the normal condition information stored in the normal condition information storage unit 22, with the normal condition information generated (step S45).

As explained above, in the distributed denial-of-service attack protecting system 50, the authorized address information, which indicates the source address of the packet that does not attack through the network 2, is transmitted to the gate device 58 in response to the request therefrom. The normal condition information, which indicates the conditions for the packet being not regarded as one that attacks on the communication device 7, is updated based on the authorized address information transmitted to the gate device 58, thereby easily managing the normal condition information.

The gate devices according to the first embodiment and the second embodiment make use of their capabilities by loading programs to a computer and executing it. More specifically, a program including routines as follows is previously stored. The program includes the routine for acquiring authorized address information in ROM (Read Only Memory) of a computer, the routine for generating normal condition information indicating conditions of a non-attacking packet based on the authorized address information, and the routine for restricting the passage of a packet that is to attack on a communication device while allowing the passage of a packet that matches the conditions indicated in the normal condition information, among packets received from a network. Then, by loading the program into the CPU and executing it, the gate device according to the present invention can be formed.

### Third Embodiment

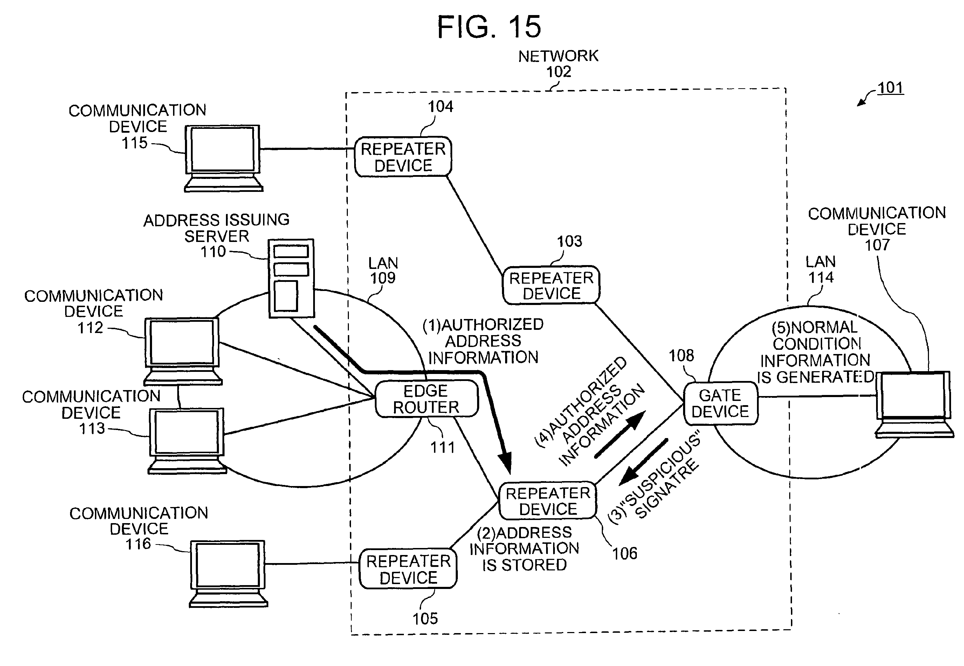

In a third embodiment of the present invention, a case where a gate device transmits a suspicious signature to a repeater device and acquires authorized address information in response to the transmission is explained below. Fig. 15 is a block diagram of a distributed denial-of-service attack protecting system 101 according to the third embodiment. The distributed denial-of-service attack protecting system 101 is a system to protect a communication device 107 against distributed denial of service attacks mainly by a gate device 108. More specifically, the gate device 108 acquires authorized address information indicating a source address of a non-attacking packet transmitted by an authorized device (address issuing server 110) on a network 102, generates normal condition information indicating conditions for the non-attacking packet, based on the authorized address information acquired, and restricts the passage of a packet which attacks on the communication device 107 while allowing the passage of a packet which matches the conditions indicated in the normal condition information, among packets received from the network. A normal signature and a suspicious signature generated by the gate device 108 based on the normal condition information are transferred to a repeater device 106, which allows the repeater device 106 to subject packets to filtering.

Conventionally, adding and changing the authorized address information are managed by an operator of the gate device 108, and this makes the management of the authorized address information complicated. Therefore, in the third embodiment, the burden of adding the authorized address information is not put on the operator of the gate device 108, but it is configured to acquire the authorized address information from an authorized terminal such as the address issuing server 110. Hence, according to the third embodiment, the management burden on the operator of the gate device 108 can be reduced.

In the third embodiment, the gate device 108 acquires authorized address information in the following manner. The address issuing server 110 transmits authorized address information to the repeater device 106 (step (1) of Fig. 15), to store the authorized address information in the repeater device 106 (step (2) of Fig. 15), and the gate device 108 generates a suspicious signature indicating the feature of a packet detected as one that has attacked, and transmits the suspicious signature generated to the repeater device 106 (step (3) of Fig. 15). The repeater device 106 transfers the authorized address information previously stored to the gate device 108 (step (4) of Fig. 15), and the gate device 108 automatically generates the normal condition information based on the authorized address information received (step (5) of Fig. 15).

The system construction of the distributed denial-of-service attack protecting system 101 is explained below. The distributed denial-of-service attack protecting system 101 includes repeater devices 103 to 105 and the repeater device 106 that repeat a packet to be transmitted through the network 102, and the gate device 108 that restricts the passage of a packet to be transmitted to the communication device 107 through the network 102. The construction of the distributed denial-of-service attack protecting system 101 is only an example. In other words, the number of repeater devices and gate devices and the way to construct networks are not restricted to those shown in the figures.

The gate device 108 includes a gateway device that serves as an inter-network connection device, and is connected to a Local Area Network (hereinafter, "LAN") 114 that includes the communication device 107 formed with a computer and the like. Each of the repeater devices 103 to 106 includes a router. The repeater devices 103 to 106 may also be configured in a bridge mode.

Here, the repeater device 103 is connected to the repeater device 104 and the gate device 108, the repeater device 104 is connected to a communication device 115 and the repeater device 103, the repeater device 105 is connected to a communication device 116 and the repeater device 106, and the repeater device 106 is connected to the repeater device 105, an edge router 111, and to the gate device 108.

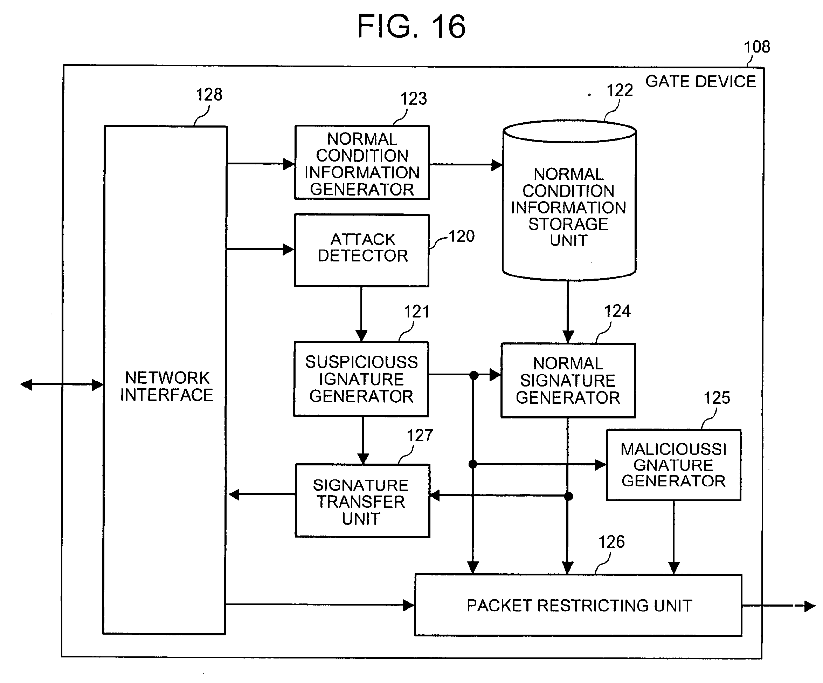

Fig. 16 is a detailed block diagram of the gate device 108. The gate device 108 includes an attack detector 120 that detects an attack performed by a packet received from the network 102; a suspicious signature generator 121 that generates a suspicious signature indicating a feature of a packet detected as one that has attacked; a normal condition information storage unit 122 that stores normal condition information indicating conditions for a packet (non-attacking packet) being not regarded as one that attacks on the communication device 107; a normal condition information generator 123 that generates normal condition information to be stored in the normal condition information storage unit 122; a normal signature generator 124 that generates a normal signature indicating the feature of a packet, which matches the conditions indicated in the normal condition information, among packets that apply to the suspicious signature; a malicious signature generator 125 that generates a malicious signature indicating the feature of a packet, which is regarded as one attacking on the communication device 107, among packets that apply to the suspicious signature; a packet restricting unit 126 that restricts the passage of a packet received from the network 102 based on the suspicious signature, the normal signature, and the malicious signature; a signature transfer unit 127 that transfers the suspicious signature and the normal signature to the repeater device 103 and the repeater device 106, each of which is provided in an adjacent relation to the gate device 108; and a network interface 128 that performs communications with devices connected to the network 102.

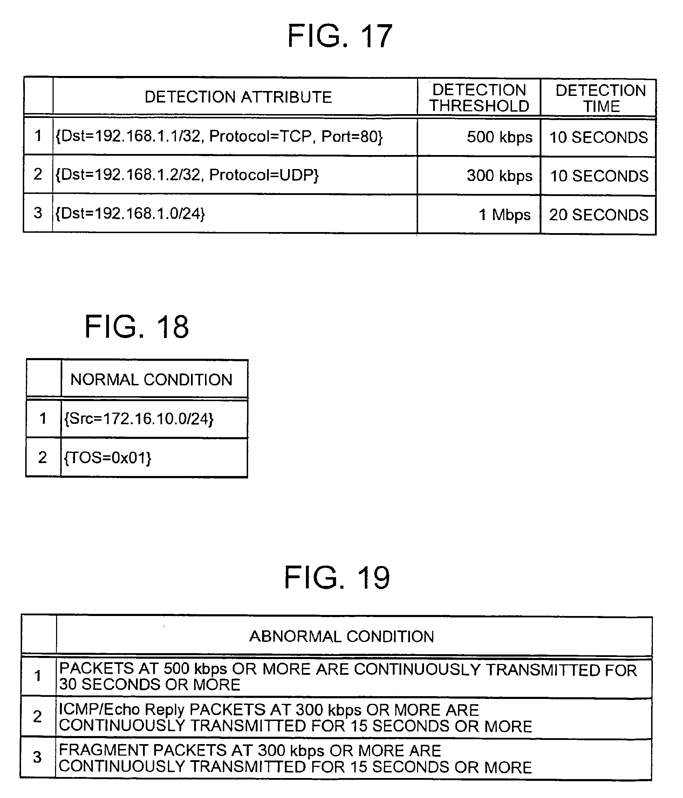

The attack detector 120 is a processor that detects an attack based on the preset attack detection conditions. Fig. 17 is a schematic for explaining the attack detection conditions. In Fig. 17, the attack detection condition consists of three groups of records such as detection attribute, detection threshold, and detection time. The detection attribute indicates an attribute of a target packet for detection, the detection threshold indicates a threshold of a transmission rate of a target packet for detection, and the detection time indicates a threshold of time during which the transmission rate of the target packet for detection has exceeded the detection threshold.

For example, in a first detection condition, a target for detection is a packet as follows: destination address information is 192.168.1.1 (Dst=192.168.1.1/32), the transport layer protocol is TCP (Transmission Control Protocol) (Protocol=TCP), and the TCP port number is 80 (Prot=80). When a status, where the transmission rate of the packet as the target for detection has exceeded 500 kbps, continues for 10 seconds or longer, it is detected as an attack by the target packet for detection.

Likewise, in a second detection condition, a target for detection is a packet as follows: destination address information is 192.168.1.2 (Dst=192.168.1.2/32), and the transport layer protocol is UDP (User Datagram Protocol) (Protocol=UDP). When a status, where the transmission rate of the packet as the target for detection has exceeded 300 kbps, continues for 10 seconds or longer, it is detected as an attack by the target packet for detection.

Furthermore, in a third detection condition, a target for detection is a packet as follows: destination address information is in a range of 192.168.1.0 to 192.168.1.255 (Dst=192.168.1.0/24). When a status, where the transmission rate of the packet as the target for detection has exceeded 1 Mbps, continues for 20 seconds or longer, it is detected as an attack by the target packet for detection.

When the attack by the target packet for detection is detected by the attack detector 120, the suspicious signature generator 121 generates a suspicious signature indicating the feature of the target packet for detection. For example, when the attack, which matches the first detection condition of the attack detection conditions shown in Fig. 17, is detected, the suspicious signature generator 121 generates a suspicious signature indicating the packet in which the destination address information is 192.168.1.1, the transport layer protocol is TCP, and the TCP port number is 80. The suspicious signature may include processes such as shaping and filtering performed on a target packet, and parameters for the processes.

The normal condition information storage unit 122 is formed with a nonvolatile storage medium such as a flash memory. Fig. 18 is a schematic for explaining normal condition information stored in the normal condition information storage unit 122. In Fig. 18, the normal condition information includes normal conditions being conditions that are not regarded as an attack.

For example, a packet (Src=172.16.10.0/24), in which source address information is in a range of 172.16.10.0 to 172.16.10.255, is not regarded as an attack based on the first normal condition. Likewise, a packet (TOS=0x01), in which a service type (Type of Service) is 0x01, is not regarded as an attack based on the second normal condition.

The normal condition information generator 123 is a processor being the most important feature of the third embodiment, and automatically updates the normal condition information stored in the normal condition information storage unit 22 without performance of the processes by the operator. Conventionally, the management of the normal condition information is left to the operator, but in the third embodiment, the normal condition information is automatically updated.

More specifically, when the authorized address information indicating the source address of a packet, which does not attack through the network 102, is transmitted from either one of the adjacent repeater devices 103 and 106 and the authorized address information transmitted is received by the network interface 128, the normal condition information generator 123 generates normal condition information based on the authorized address information, and updates the normal condition information stored in the normal condition information storage unit 122, with the normal condition information generated. In other words, the packet having the authorized address information as a transmission address is not regarded as one that attacks on the communication device 107. Although automatic addition of the normal condition information is emphasized here, the normal condition information stored in the normal condition information storage unit 122 may be edited, for example, added, deleted, and changed by the operator of the gate device 108.

The normal signature generator 124 is a processor that generates a normal signature indicating the feature of a packet, which matches the conditions indicated in the normal condition information, among packets that apply to the suspicious signature generated by the suspicious signature generator 121.

For example, when an attack, which matches the first attack detection condition of Fig. 17, is detected by the attack detector 120, the normal signature generator 124 generates both a normal signature indicating a packet in which the destination address information is 192.168.1.1, the transport layer protocol is TCP, the TCP port number is 80, and the source address information is in a range of 172.16.10.0 to 172.16.10.255; and a normal signature indicating a packet in which the destination address information is 192.168.1.1, the transport layer protocol is TCP, the TCP port number is 80, and the service type is 0x01, based on the normal condition information shown in Fig. 18.

The malicious signature generator 125 is a processor that generates a malicious signature indicating the feature of a packet, which matches abnormal conditions, among packets that apply to the suspicious signature generated by the suspicious signature generator 121.

Fig. 19 is a schematic for explaining the abnormal conditions. In Fig. 19, a first abnormal condition indicates packets which are continuously transmitted for 30 seconds or longer at a transmission rate of 500 kbps or more. Likewise, a second abnormal condition indicates ICMP (Internet Control Message Protocol) Echo-Reply packets which are continuously transmitted for 15 seconds or longer at a transmission rate of 300 kbps or more. A third abnormal condition indicates fragment packets which are divided and continuously transmitted for 15 seconds or longer at a transmission rate of 300 kbps or more.

The packet restricting unit 126 restricts the passage of packets received by the network interface 128, based on the suspicious signature generated by the suspicious signature generator 121, the normal signature generated by the normal signature generator 124, and the malicious signature generated by the malicious signature generator 125.

More specifically, the packet restricting unit 126 abandons the packet that applies to the malicious signature, passes the packet that applies to the normal signature without any restriction thereto, and passes the packet that applies to the suspicious signature through a path in which a transmission bandwidth is restricted based on the processes indicated in the suspicious signature.

The signature transfer unit 127 is a processor that transfers the suspicious signature and the normal signature to the repeater device 103 and the repeater device 106, each of which is provided in an adjacent relation to the gate device 108. The repeater device 103 and the repeater device 106 further transfer the packet to adjacent repeater devices, respectively. The adjacent relation indicates an adjacent relation to the gate device and to each of the repeater devices according to the present invention, which is different from a physical connection relation.

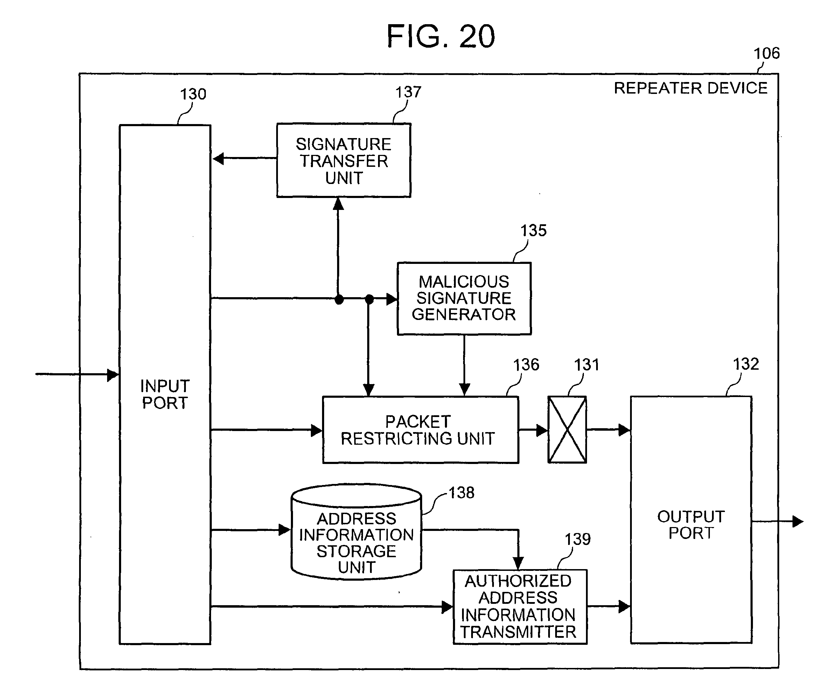

Fig. 20 is a detailed block diagram of the repeater device 106. Only the configuration of the repeater device 106 is explained below. The repeater devices 103 to 105 have similar configuration as that of the repeater device 106. The repeater device 106 includes an input port 130; a switch 131 for routing a packet; an output port 132; a malicious signature generator 135 that generates a malicious signature; a packet restricting unit 136 that restricts the passage of a packet input to the input port 130, based on the malicious signature, and the suspicious signature and the normal signature transferred by the gate device 108; a signature transfer unit 137 that transfers the suspicious signature and the normal signature to the adjacent repeater device 105; an authorized address information storage unit 138 that stores authorized address information held by the repeater device 106; and an authorized address information transmitter 139 that transmits the authorized address information stored in the authorized address information storage unit 138.

The malicious signature generator 135, the packet restricting unit 136, and the signature transfer unit 137 are configured in the same manner as those of the malicious signature generator 125, the packet restricting unit 126, and the signature transfer unit 127, respectively, which form the gate device 108, and hence, detailed explanation thereof is omitted. The repeater device 106 may include the attack detector, the suspicious signature generator, the normal condition information storage unit, and the normal signature generator in the same manner as the gate device 108.

The signature transfer unit 137 determines whether a packet, applying to the suspicious signature which exceeds the restricted transmission rate, is received by the input port 130 after the passage of the packet is restricted by the packet restricting unit 136. If it is determined that the packet, applying to the suspicious signature which exceeds the restricted transmission rate, is received by the input port 130, the signature transfer unit 137 transfers the suspicious signature and the normal signature. If it is determined that the packet, applying to the suspicious signature which exceeds the restricted transmission rate, is not received by the input port 130, the signature transfer unit 137 does not transfer the suspicious signature and the normal signature.

In the construction of Fig. 15, the repeater device 104 and the repeater device 105 do not include a repeater device that transfers the suspicious signature and the normal signature. Accordingly, the signature transfer unit 137 does not transfer the suspicious signature and the normal signature.

When the attack is detected by the gate device 108 in the above manner, a suspicious signature and a normal signature are generated, and the suspicious signature and the normal signature generated are transferred to the repeater devices 103 to 106, and the packet is subjected to processing such as shaping and filtering in the gate device 8 and the repeater devices 103 to 106. Therefore, in the distributed denial-of-service attack protecting system 101, for example, when the attack detected by the gate device 108 is performed through the communication device 115, the passage of a packet that attacks is restricted by a repeater device near an attack source, i.e. by the repeater device 104, thus reducing bad influence caused by the packet that attacks.

The address information storage unit 138 is formed with a nonvolatile storage medium, and stores authorized address information.

Referring to Fig. 15, LAN 109 is connected to the network 102 via the edge router 111, and is also connected with communication devices 112 and 113 such as a computer. It is assumed that no attack is performed through the network 102 in the LAN 109.

The address issuing server 110 connected to the LAN 109 transmits address information for the LAN 109 or authorized address information including address information for the communication devices 112 and 113 connected to the LAN 109, to the repeater device 106. The address issuing server 110 may periodically transmits the authorized address information, or may transmit it in response to its startup by the operator of the address issuing server 110. In addition to the address issuing server 110, any device such as the edge router 111 that forms the LAN 9 may transmit the authorized address information.

Referring to Fig. 20, the authorized address information storage unit 138 further adds the authorized address information transmitted by the address issuing server 110 to that in the authorized address information storage unit 138.

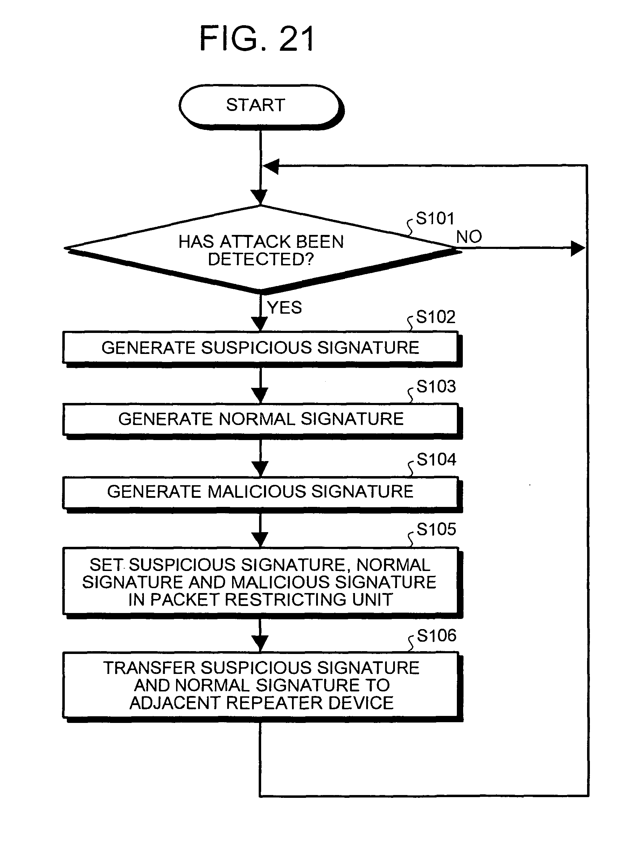

In the distributed denial-of-service attack protecting system 101 configured in the above manner, the operation is explained with reference to Fig. 21 to Fig. 24. Fig. 21 is a flowchart of a process procedure for attack detection in the gate device 108.

At first, when the attack detector 120 detects an attack performed by a packet received by the network interface 128 based on the attack detection conditions (step S101), the suspicious signature generator 121 generates a suspicious signature indicating the feature of the packet detected as one that has attacked (step S102).

Then, the normal signature generator 124 generates a normal signature indicating the feature of a packet, which matches the conditions indicated in the normal condition information, among packets applying to the suspicious signature (step S103), and the malicious signature generator 125 generates a malicious signature indicating the feature of a packet, which matches the abnormal conditions, among packets applying to the suspicious signature (step S104).

The suspicious signature, the normal signature, and the malicious signature are set in the packet restricting unit 126 as the packet passage conditions (step S105). The suspicious signature and the normal signature are further transferred by the signature transfer unit 127 to the repeater device 103 and the repeater device 106, each of which is provided in the adjacent relation to the gate device 108 (step S106).

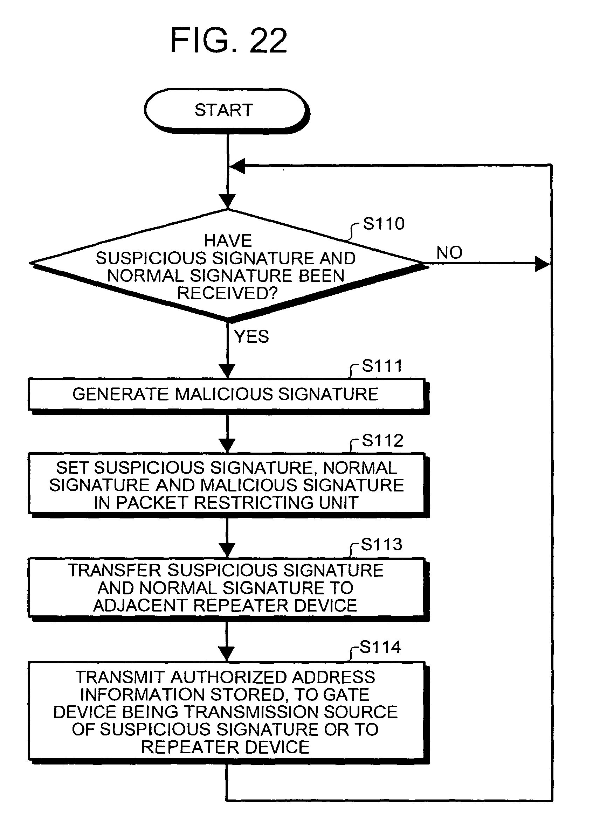

Fig. 22 is a flowchart of a process procedure for signature reception in the repeater device 106. At first, when the suspicious signature and the normal signature are received by the input port 130 (step S110), the malicious signature generator 135 generates a malicious signature indicating the feature of a packet, which matches the abnormal conditions, among packets applying to the suspicious signature received (step S111).

Then, the suspicious signature, the normal signature, and the malicious signature are set in the packet restricting unit 136 as the packet passage conditions (step S112). The suspicious signature and the normal signature are transferred by the signature transfer unit 137 to the adjacent repeater device 105 (step S113). Furthermore, the repeater device 106 transmits the authorized address information stored in the authorized address information storage unit 138 to the gate device 108 which is the transmission source of the suspicious signature (step S114).

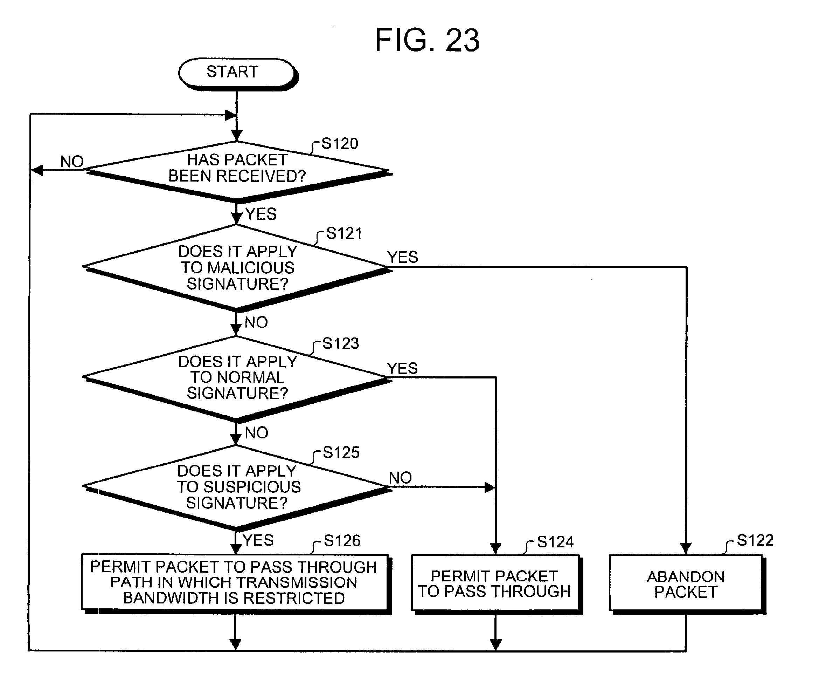

Fig. 23 is a flowchart of a process procedure for packet restriction in the gate device 108. At first, when a packet is received by the network interface 128 (step S120), the packet restricting unit 126 determines whether the packet received applies to the malicious signature (step S121).

When it is determined that the packet applies to the malicious signature, the packet restricting unit 126 abandons the packet (step S122). On the other hand, when it is determined that the packet does not apply to the malicious signature, the packet restricting unit 126 determines whether the packet applies to the normal signature (step S123).

When it is determined that the packet applies to the normal signature, the packet restricting unit 126 permits the packet to pass through (step S124). On the other hand, when it is determined that the packet does not apply to the normal signature, the packet restricting unit 126 determines whether the packet applies to the suspicious signature (step S125).

When it is determined that the packet applies to the suspicious signature, the packet restriction unit 126 permits the packet to pass through a path in which a transmission bandwidth is restricted based on the processes indicated in the suspicious signature (step S126). On the other hand, when it is determined that the packet does not apply to the suspicious signature, the packet restricting unit 26 permits the packet to pass through (step S124). The operation for packet restriction in the repeater devices 103 to 106 is the same as that in the gate device 8, and hence, explanation thereof is omitted.

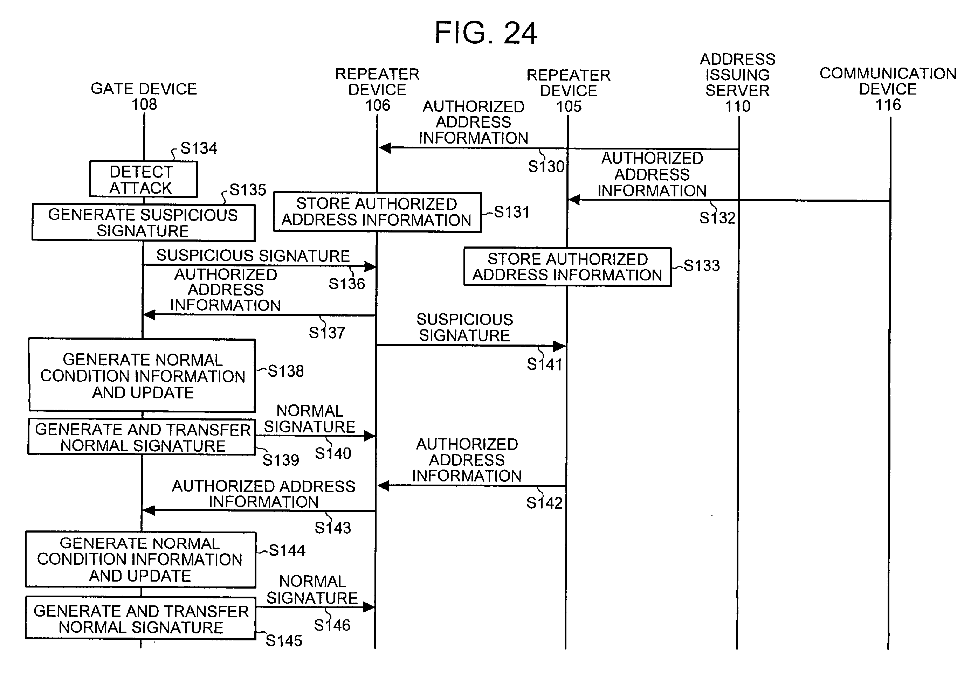

Fig. 24 is a sequence diagram of a process procedure for updating normal condition information in the distributed denial-of-service attack protecting system 101. The authorized address information in the LAN 109 is transmitted from the address issuing server 110 of the LAN 109 to the repeater device 106 (step S130), and is stored in the authorized address information storage unit 138 of the repeater device 106 (step S131). At the same time, the authorized address information from the communication device 116 is transmitted to the repeater device 105 (step S132), and is stored in the authorized address information storage unit 138 of the repeater device 105 (step S133).

When detecting an attack (step S134), the gate device 108 generates a corresponding suspicious signature (step S135), and transfers the suspicious signature to the adjacent repeater device 103 and repeater device 106 (step S136). The description of the signature transfer to the repeater device 103 and the repeater device 106 is omitted in the following, for simplicity.

When receiving the suspicious signature from the gate device 108, the repeater device 106 sends the authorized address information stored in the authorized address information storage unit 138 back to the gate device 108 (step S137), and further forwards the suspicious signature to the repeater device 105 (step S141). It is noted that the order of processes at step S137 and step S141 can be reversed.

When the authorized address information is received by the network interface 128 of the gate device 108, the normal condition information generator 123 generates normal condition information based on the authorized address information received, and updates the normal condition information stored in the normal condition information storage unit 122, with the normal condition information generated (step S138). Then, the normal signature generator 124 generates a corresponding normal signature and transmits the normal signature generated to the packet restricting unit and the repeater device 106 (steps S139 to S140).

On the other hand, when receiving the suspicious signature from the repeater device 106, the repeater device 105 transmits the authorized address information stored in the authorized address information storage unit 138 to a repeater device that is the transmission source of the suspicious signature i.e. to the repeater device 106 (step S142). The repeater device 106 forwards the authorized address information received from the repeater device 105 to the gate device 108 (step S143).

When receiving the authorized address information by the network interface 128 of the gate device 108, the normal condition information generator 123 generates normal condition information based on the authorized address information received, and updates the normal condition information stored in the normal condition information storage unit 122, with the normal condition information generated (step S144). Then, the normal signature generator 124 generates a corresponding normal signature and transfers the normal signature generated to the packet restricting unit and the repeater device 106 (steps S145 to S146).

According to the distributed denial-of-service attack protecting system 101 as explained above, the authorized address information, indicating the source address of a packet that does not attack through the network 102, is transmitted to the gate device 108, and the normal condition information, indicating the conditions for the packet being not regarded as one that attacks on the communication device 107, is updated based on the authorized address information transmitted to the gate device 108, thus easily managing the normal condition information.

The gate device 108 according to the third embodiment makes use of its capabilities by loading a program to a computer and executing it. More specifically, a program including routines as follows is previously stored. The program includes the routine for transmitting the suspicious signature to ROM (Read Only Memory) of a computer and acquiring authorized address information, the routine for generating the normal condition information indicating conditions for a non-attacking packet based on the authorized address information, and the routine for restricting the passage of a packet that is to attack on a communication device while allowing the passage of a packet that matches the conditions indicated in the normal condition information, among packets received from the network. Then, by loading the program into the CPU and executing it, the gate device 108 according to the present invention can be formed.

### INDUSTRIAL APPLICABILITY

The denial-of-service attack protecting method, the denial-of-service attack protecting system, the denial-of-service attack protecting device, the repeater device, the denial-of-service attack protecting program, and the program for the repeater device according to the present invention are suitable for protection of communication devices from the denial of service attacks and the distributed denial-of-service attacks.

## Claims

1. A denial-of-service attack protecting method of protecting a communication device against a denial of service attack using a gate device or a repeater device, the gate device interposing between the repeater device that forms part of a network and the communication device that is a target of the denial of service attack, comprising:
an issuing step, in which an authorized device on the network issues authorized address information indicating a source address of a non-attacking packet; and
a restricting step, in which the gate device restricts passage of a packet that may attack on the communication device, based on the authorized address information issued by the authorized device.

2. The denial-of-service attack protecting method of protecting a communication device against a denial of service attack using a gate device or a repeater device, the gate device interposing between the repeater device that forms part of a network and the communication device that is a target of the denial of service attack, according to claim 1, further comprising:
an authorized address information acquiring step, in which the gate device acquires the authorized address information indicating a source address of a non-attacking packet transmitted by an authorized device on the network;
a normal condition information generating step, in which the gate device generates normal condition information indicating conditions for the non-attacking packet, based on the authorized address information acquired in the authorized address information acquiring step; and
a packet restricting step, in which the gate device restricts the passage of a packet that may attack on the communication device, while allowing the passage of a packet that matches the conditions indicated in the normal condition information generated in the normal condition information generating step, among packets received from the network.

3. The denial-of-service attack protecting method according to claim 2, wherein the authorized address information acquiring step includes
an address information reporting step, in which the gate device reports address information for its own device to the repeater device,
an authorized address information repeating step, in which, when receiving authorized address information from the authorized device, the repeater device repeats the authorized address information to the gate device based on the address information reported in the address information reporting step, and
a receiving step, in which the gate device receives the authorized address information.

4. The denial-of-service attack protecting method according to claim 3, wherein
in the address information reporting step, the repeater device, to which the address information for the gate device is reported, repeats the address information for the gate device to another repeater device that is provided adjacent to the repeater device, and
in the authorized address information repeating step, when receiving authorized address information from the authorized device, the another repeater device repeats the authorized address information to an adjacent repeater device or the gate device based on the address information for the gate device.

5. The denial-of-service attack protecting method according to claim 2, wherein the authorized address information acquiring step includes
an authorized address information storing step, in which an authorized address information providing device, which integrally manages authorized address information, receives the authorized address information from each authorized device, and stores it,
an authorized address information reporting step, in which, when accepting a transmission request for the authorized address information from the gate device, the authorized address information providing device reports the authorized address information requested for its transmission, to the gate device, and
a receiving step, in which the gate device receives the authorized address information.

6. The denial-of-service attack protecting method according to any one of claims 2 to 5, wherein in the authorized address information acquiring step,
the gate device acquires the authorized address information transmitted by an address issuing device that issues an address or by a communication device that is authorized.

7. The denial-of-service attack protecting method according to claim 2, further comprising:
an attack detecting step, in which the gate device detects an attack performed by a packet received from the network;
a suspicious signature generating step, in which the gate device generates a suspicious signature indicating a feature of the packet as one that has attacked, which is detected in the attack detecting step;
a normal condition information storing step, in which the gate device stores the normal condition information generated in the normal condition information generating step, in a normal condition information storage unit; and
a normal signature generating step, in which the gate device generates a normal signature indicating a feature of a packet, which matches conditions indicated in the normal condition information, among packets applying to the suspicious signature generated in the suspicious signature generating step, wherein
in the packet restricting step, the gate device restricts the passage of a packet received from the network based on the suspicious signature generated in the suspicious signature generating step and the normal signature generated in the normal signature generating step.

8. The denial-of-service attack protecting method according to claim 7, further comprising:
a signature reporting step, in which the gate device reports the suspicious signature generated in the suspicious signature generating step and the normal signature generated in the normal signature generating step, to the repeater device; and
a packet restriction controlling step, in which the repeater device controls restriction to the passage of a packet based on the suspicious signature and the normal signature reported in the signature reporting step.

9. The denial-of-service attack protecting method of protecting a communication device against a denial of service attack using a gate device or a repeater device, the gate device interposing between the repeater device that forms part of a network and the communication device that is a target of the denial of service attack, according to claim 1, further comprising:
an attack detecting step, in which the gate device detects an attack performed by a packet received from the network;
an authorized address information acquiring step, in which, when an attack on the communication device is detected in the attack detecting step, the gate device acquires authorized address information from the repeater device, the authorized address information indicating a source address of a non-attacking packet which is received from an authorized device on the network; and
a passage controlling step, in which the gate device controls the passage of a packet based on the normal condition information, indicating conditions for the non-attacking packet, which is generated from the authorized address information received from the repeater device.

10. The denial-of-service attack protecting method according to claim 9, further comprising:
a suspicious signature generating step, in which the gate device generates a suspicious signature indicating a feature of the packet as one that has attacked, which is detected in the attack detecting step, wherein in the authorized address information acquiring step,
the gate device transmits the suspicious signature generated in the suspicious signature generating step to the repeater device, and acquires authorized address information sent back in response to the transmission.

11. The denial-of-service attack protecting method according to claim 10, wherein the passage controlling step includes
a normal condition information generating step of generating normal condition information indicating conditions for a non-attacking packet based on the authorized address information acquired in the authorized address information acquiring step, and
a packet restricting step of restricting the passage of a packet that may attack on the communication device, while allowing the passage of a packet that matches the conditions indicated in the normal condition information generated in the normal condition information generating step, among packets received from the network.

12. The denial-of-service attack protecting method according to claim 11, further comprising:
a normal signature generating step of generating a normal signature indicating a feature of a packet that matches conditions indicated in the normal condition information generated in the normal condition information generating step, wherein in the packet restricting step,
the passage of a packet received from the network is restricted based on the suspicious signature generated in the suspicious signature generating step and the normal signature generated in the normal signature generating step.

13. The denial-of-service attack protecting method according to claim 12, further comprising:
a signature forwarding step, in which the gate device forwards the normal signature generated in the normal signature generating step, to the repeater device.

14. A denial-of-service attack protecting system for protecting a communication device against a denial of service attack using a gate device or a repeater device, the gate device interposing between the repeater device that forms part of a network and the communication device that is a target of the denial of service attack, wherein the gate device comprises:
an authorized address information acquiring unit that acquires authorized address information indicating a source address of a non-attacking packet transmitted by an authorized device on the network;
a normal condition information generating unit that generates normal condition information indicating conditions for the non-attacking packet, based on the authorized address information acquired by the authorized address information acquiring unit; and
a packet restricting unit that restricts the passage of a packet that may attack on the communication device, while allowing the passage of a packet that matches the conditions indicated in the normal condition information generated by the normal condition information generating unit, among packets received from the network.

15. A denial-of-service attack protecting system of protecting a communication device against a denial of service attack using a gate device or a repeater device, the gate device interposing between the repeater device that forms part of a network and the communication device that is a target of the denial of service attack, wherein the gate device comprising:
an attack detecting unit that detects an attack performed by a packet received from the network;
an authorized address information acquiring unit that, when an attack on the communication device is detected by the attack detecting unit, acquires authorized address information from the repeater device, the authorized address information indicating a source address of a non-attacking packet which is received from an authorized device on the network; and
a passage controlling unit that controls the passage of a packet based on the normal condition information, indicating conditions for the non-attacking packet, which is generated from the authorized address information received from the repeater device.

16. A gate device that protects a communication device against a denial of service attack, the gate device interposing between a repeater device that forms part of a network and the communication device that is a target of the denial of service attack, comprising:
an attack detecting unit that detects an attack performed by a packet received from the network;
an authorized address information acquiring unit that, when an attack on the communication device is detected by the attack detecting unit, acquires authorized address information from the repeater device, the authorized address information indicating a source address of a non-attacking packet which is received from an authorized device on the network; and
a passage controlling unit that controls the passage of a packet based on the normal condition information, indicating conditions for the non-attacking packet, which is generated from the authorized address information received from the repeater device.

17. The gate device according to claim 16, wherein the authorized address information acquiring unit includes
an address information reporting unit that reports address information for its own device to the repeater device, and
a receiving unit that receives the authorized address information from the authorized device sent back by the repeater device in response to the address information for the own device reported by the address information reporting unit.

18. The gate device according to claim 17, wherein the authorized address information acquiring unit includes
an authorized address information transmission requesting unit that issues a transmission request for the authorized address information to an authorized address information providing device that integrally manages authorized address information, and
a receiving unit that receives the authorized address information sent back in response to the transmission request for the authorized address information.

19. A gate device that protects a communication device against a denial of service attack, the gate device interposing between a repeater device that forms part of a network and the communication device that is a target of the denial of service attack, comprising:
an attack detecting unit that detects an attack performed by a packet received from the network;
an authorized address information acquiring unit that, when an attack on the communication device is detected by the attack detecting unit, acquires authorized address information from the repeater device, the authorized address information indicating a source address of a non-attacking packet which is received from an authorized device on the network; and
a passage controlling unit that controls the passage of a packet based on the normal condition information, indicating conditions for the non-attacking packet, which is generated from the authorized address information received from the repeater device.

20. The gate device according to claim 19, further comprising:
a suspicious signature generating unit that generates a suspicious signature indicating a feature of the packet as one that has attacked, which is detected by the attack detecting unit, wherein
the authorized address information acquiring unit transmits the suspicious signature generated by the suspicious signature generating unit to the repeater device, and acquires authorized address information sent back in response to the transmission.

21. The gate device according to claim 20, wherein the passage controlling unit includes
a normal condition information generating unit that generates normal condition information indicating conditions for a non-attacking packet based on the authorized address information acquired by the authorized address information acquiring unit, and
a packet restricting unit that restricts the passage of a packet that may attack on the communication device, while allowing the passage of a packet that matches the conditions indicated in the normal condition information generated by the normal condition information generating unit, among packets received from the network.

22. A repeater device connected to a gate device that protects a communication device being a target of a denial of service attack, and/or connected to one or more repeater devices that form a network, comprising:
an address information acquiring unit that acquires address information for the gate device; and
an authorized address information repeating unit that repeats authorized address information to the gate device or another adjacent repeater device based on the address information acquired by the address information acquiring unit, when receiving the authorized address information indicating a source address of a non-attacking packet transmitted by an authorized device on the network.

23. A repeater device connected to a gate device that protects a communication device being a target of a denial of service attack, and/or connected to one or more repeater devices that form a network, comprising:
an authorized address information storage unit that stores authorized address information indicating a source address of a non-attacking packet received from an authorized device on the network; and
a transfer unit that transfers the authorized address information stored in the authorized address information storage unit when the gate device detects an attack on the communication device.

24. A computer program that causes a gate device to protect a communication device against a denial of service attack, the gate device interposing between a repeater device that forms part of a network and the communication device that is a target of the denial of service attack, the computer program causing the gate device to execute:
an attack detecting step of detecting an attack performed by a packet received from the network;
an authorized address information acquiring of acquiring, when an attack on the communication device is detected in the attack detecting step, authorized address information from the repeater device, the authorized address information indicating a source address of a non-attacking packet which is received from an authorized device on the network; and
a passage controlling step of controlling the passage of a packet based on the normal condition information, indicating conditions for the non-attacking packet, which is generated from the authorized address information received from the repeater device.

25. The computer program according to claim 24, wherein the authorized address information acquiring step includes
an address information reporting step of reporting address information for its own device to the repeater device, and
a receiving step of receiving the authorized address information from the authorized device sent back by the repeater device in response to the address information for the own device reported at the address information reporting step.

26. The computer program according to claim 24, wherein the authorized address information acquiring step includes
an authorized address information transmission requesting step of issuing a transmission request for the authorized address information to an authorized address information providing device that integrally manages authorized address information, and
a receiving step of receiving the authorized address information sent back in response to the transmission request for the authorized address information.

27. A computer program that causes a gate device to protect a communication device against a denial of service attack, the gate device interposing between a repeater device that forms part of a network and the communication device that is a target of the denial of service attack, the computer program causing the gate device to execute:
an attack detecting step of detecting an attack performed by a packet received from the network;
an authorized address information acquiring step of acquiring, when an attack is detected in the attack detecting step, authorized address information from the repeater device, the authorized address information indicating a source address of a non-attacking packet which is received from an authorized device on the network; and
a passage controlling step of controlling the passage of a packet based on the normal condition information, indicating conditions for the non-attacking packet, which is generated from the authorized address information received from the repeater device.

28. The computer program according to claim 27, wherein the computer program further causes the gate device to execute a suspicious signature generating step of generating a suspicious signature indicating a feature of the packet as one that has attacked, which is detected by the attack detecting unit, wherein
the authorized address information acquiring step includes transmitting the suspicious signature generated at the suspicious signature generating step to the repeater device, and acquires authorized address information sent back in response to the transmission.

29. The computer program according to claim 28, wherein the passage controlling step includes
a normal condition information generating step of generating normal condition information indicating conditions for a non-attacking packet based on the authorized address information acquired in the authorized address information acquiring step, and
a packet restricting step of restricting the passage of a packet that may attack on the communication device, while allowing the passage of a packet that matches the conditions indicated in the normal condition information generated in the normal condition information generating step, among packets received from the network.

30. A computer program that causes a repeater device connected to a gate device to protect a communication device being a target of a denial of service attack, and/or connected to one or more repeater devices that form a network, the computer program causing the repeater device to execute:
an address information acquiring step of acquiring address information for the gate device; and
an authorized address information repeating step of repeating authorized address information to the gate device or another adjacent repeater device based on the address information acquired at the address information acquiring step, when receiving the authorized address information indicating a source address of a non-attacking packet transmitted by an authorized device on the network.

31. A computer program that causes a repeater device connected to a gate device to protect a communication device being a target of a denial of service attack, and/or connected to one or more repeater devices that form a network, the computer program causing the repeater device to execute:
an authorized address information storage step of storing authorized address information indicating a source address of a non-attacking packet received from an authorized device on the network; and
a transfer step of transferring authorized address information stored at the authorized address information storage step when the gate device detects an attack on the communication device.
